# EUROPEAN PATENT APPLICATION

(11) **EP 3 937 409 A1**
(43) Date of publication of application: **12.01.2022**
(21) Application number: 20779102.1
(22) Date of filing: 17.01.2020
(51) Int. Cl.: H04L 5/00, H04L 29/06, H04L 1/16

(54) **DATA TRANSMISSION METHOD AND APPARATUS**

(30) Priority: 25.03.2019 CN 201910229219
(71) Applicant: Huawei Technologies Co., Ltd., Shenzhen, Guangdong 518129 (CN)
(72) Inventor: LI, Tong, Shenzhen, Guangdong 518129 (CN); ZHENG, Kai, Shenzhen, Guangdong 518129 (CN); SU, Dang, Shenzhen, Guangdong 518129 (CN); CHEN, Xinping, Shenzhen, Guangdong 518129 (CN)
(74) Representative: Gill Jennings & Every LLP
(86) International application number: PCT/CN2020/072862
(87) International publication number: WO 2020/192258

(57) **Abstract**

This application discloses a data transmission method and apparatus, to improve data transmission performance. Acknowledgment information sent by a receive end to a transmit end includes a blacklist, or includes a blacklist and a whitelist. In other words, the receive end notifies, in time each time, the transmit end of information of a plurality of data packets (for example, a packet that may cause head-of-line blocking) that have not been received. In this way, the transmit end can retransmit the data packets to the receive end in time. In addition, the receive end indicates the whitelist to the transmit end, so that the transmit end can learn, in time, of a data packet newly received by the receive end. This avoids, to some extent, a bandwidth waste caused by invalid retransmission of the transmit end. In each round of retransmission, the transmit end retransmits a retransmission packet a plurality of times, and time for retransmission is inconsecutive. This avoids, to some extent, a retransmission failure caused by consecutive packet losses, and improves a retransmission success rate.

## Description

### CROSS-REFERENCE TO RELATED APPLICATIONS

This application claims priority to Chinese Patent Application No. 201910229219.1, filed with the Chinese Patent Office on March 25, 2019 and entitled "DATA TRANSMISSION METHOD AND APPARATUS", which is incorporated herein by reference in its entirety.

### TECHNICAL FIELD

This application relates to the field of communications technologies, and in particular, to a data transmission method and apparatus.

### BACKGROUND

With emergence of virtual reality, augmented reality, high-definition wireless projection, and a new application based on artificial intelligence, requirements for massive data transmission in a wide area network and a wireless local area network emerge. Because a requirement for bandwidth is increasingly high, data packet transmission requires a high throughput. "High throughput" poses a new challenge to an acknowledgment (acknowledgment, ACK) mechanism. For example, a large enterprise usually deploys a private line on a wide area network to ensure fast and reliable data transmission for some key services. However, most services are still transmitted by using a public network that is relatively cheap. For a small and medium-sized enterprise, more services are transmitted by using the public network. The public network has the following features: a high link capacity (bandwidth) (for example, 1 Gbps or 10 Gbps), a long round-trip time (for example, a domestic long round-trip time is 30 ms to 60 ms and an intercontinental long round-trip time is 100 ms to 300 ms), and presence of a non-congestion-triggered packet loss (for example, a packet loss caused by a middlebox policy, route change, and a data error) and dynamic network change. The features are hard to predict.

In a conventional technology, a data receive end usually sends an ACK packet to notify a data transmit end of a data receiving status. Some ACK packets include information (for example, an identifier of a data packet) about data packets that have been successfully received by the receive end and that have not been acknowledged when the ACK packet is generated. The data packets are data packets that are still stored in a receive buffer of the receive end and that are not processed by an application layer of the receive end when the ACK packet is generated. In this way, the transmit end may retransmit, based on the ACK packet, a data packet that is not received by the receive end. However, due to increase of network complexity and service requirements, performance of an existing ACK packet sending mechanism still needs to be improved in terms of packet loss-triggered retransmission. This also limits improvement of data transmission performance.

### SUMMARY

This application provides a data transmission method and apparatus, to improve data transmission performance.

According to a first aspect, an embodiment of this application provides a data transmission method, including: receiving, by a data receive end, a plurality of data packets from a data transmit end; updating, by the data receive end, a receive buffer of the data receive end based on the plurality of data packets; and sending, by the data receive end, acknowledgment information to the data transmit end based on the updated receive buffer, where the acknowledgment information includes a blacklist, or includes a blacklist and a whitelist, the blacklist is used to indicate missing data packets in the updated receive buffer, the missing data packets are data packets that have been sent by the data transmit end and that have not been received by the data receive end, the whitelist is used to indicate several data packets that have been received by the data receive end, and the several data packets include the plurality of data packets.

Based on the foregoing design, the acknowledgment information includes the blacklist, or includes the blacklist and the whitelist. To be specific, the receive end feeds back the acknowledgment information, to notify, in time, the transmit end of identifiers of a plurality of data packets that are not received by the receive end. In this way, the transmit end may retransmit the data packets to the receive end in time instead of retransmitting the data packets until a time expires. This improves data transmission performance. In addition, the receive end indicates the whitelist to the transmit end, so that the transmit end can learn, in time, of a data packet newly received by the transmit end. This avoids, to some extent, a bandwidth waste caused by invalid retransmission (namely, retransmission of a data packet that has been received) of the transmit end.

In a possible design, the whitelist includes an identifier of a data packet with the largest sequence number in the updated receive buffer, and the blacklist includes an identifier of a data packet with the smallest sequence number in the missing data packets.

The identifier of the data packet may be a sequence number or an offset of a sequence number of the data packet, or may be other information that can distinguish data packets.

In the foregoing design, the receive end at least notifies, in time each time, the transmit end of a data packet that is not received and that causes head-of-line blocking, so that the transmit end can send, to the receive end in time, the data packet that causes head-of-line blocking. This improves data transmission performance. In addition, the receive end indicates, to the transmit end, the identifier of the data packet with the largest sequence number in the receive buffer, that is, a newly received data packet, so that the transmit end can learn, in time, of the data packet newly received by the transmit end. This avoids, to some extent, a bandwidth waste caused by retransmission of the transmit end.

In a possible design, the whitelist further includes an identifier of a data packet with a higher priority in the updated receive buffer, and a priority of a data packet is related to an importance degree of the data packet.

A data packet with the highest priority may include an out-of-order packet, a retransmitted packet, a head-of-line packet, or the like.

Based on the foregoing design, a data packet that is received by the receive end and that has a relatively high importance degree to the transmit end is indicated. This avoids, to some extent, a bandwidth waste caused by retransmission of the transmit end.

In a possible design, the sending, by the data receive end, acknowledgment information to the data transmit end includes: when a feedback condition is met, sending, by the data receive end, the acknowledgment information to the data transmit end, where the feedback condition includes one or more of the following:
a quantity of received data packets reaches a first threshold;
a quantity of received data bits reaches a second threshold; or
a time point of a feedback period is reached.

In a possible design, the blacklist includes an offset of a sequence number of a second data packet when a sequence number of a first data packet is used as a reference, the second data packet is any data packet in the missing data packets, and the first data packet is a data packet that has been received by the data receive end; or the whitelist includes an offset of a sequence number of a third data packet when a sequence number of the first data packet is used as a reference, and the third data packet is any data packet in the several data packets.

In the foregoing design, the offset of the sequence number is used as the identifier of the data packet. This simplifies encoding, and reduces space occupied by encoding.

In a possible design, the missing data packets include N data packets with consecutive sequence numbers, and the blacklist further includes an offset of a sequence number of a data packet with the smallest sequence number and an offset of a sequence number of a data packet with the largest sequence number in the N data packets with consecutive sequence numbers; or the several data packets include N data packets with consecutive sequence numbers, and the whitelist further includes an offset of a sequence number of a data packet with the smallest sequence number and an offset of a sequence number of a data packet with the largest sequence number in the N data packets with consecutive sequence numbers, where N is an integer greater than 1.

In the foregoing design, an encoding manner of a plurality of data packets with consecutive sequence numbers is provided. This is simple and occupies less space.

In a possible design, the offset of the sequence number is encoded by using an M-bit unsigned integer, high L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number, and low M-L bits of the second unsigned integer are used to encode the offset of the sequence number of the data packet with the largest sequence number, where both M and L are integers greater than 1, and M is greater than L.

In a possible design, the acknowledgment information further includes an identifier of a data packet with the largest sequence number in data packets that have been acknowledged.

In a possible design, the acknowledgment information further includes an amount of data currently stored in the receive buffer.

In the foregoing design, the transmit end may estimate, based on the sequence number of the data packet that has been acknowledged by the transmit end, an amount of data that needs to be retransmitted by the transmit end, and further determine a network status based on the amount of to-be-retransmitted data, to determine whether to perform a transmission operation.

In a possible design, the blacklist and the whitelist are encoded by using a bitmap encoding manner.

In a possible design, the missing data packets include N1 data packets with consecutive sequence numbers, and the blacklist includes a sequence number range from the smallest sequence number to the largest sequence number in the N1 sequence numbers, where N1 is an integer greater than 0; or the several data packets include N2 data packets with consecutive sequence numbers, and the whitelist includes a sequence number range from the smallest sequence number to the largest sequence number in the N2 sequence numbers, where N2 is an integer greater than 0.

In a possible design, the acknowledgment information includes the blacklist and the whitelist, and the sending, by the data receive end, acknowledgment information to the data transmit end includes: sending a first feedback packet and a second feedback packet to the data transmit end, where the first feedback packet includes the blacklist, and the second feedback packet includes the whitelist; or sending a third feedback packet to the data transmit end, where the third feedback packet includes the blacklist and the whitelist.

According to a second aspect, an embodiment of this application provides a data transmission method, including: receiving, by a data transmit end, a first feedback packet from a data receive end, where the first feedback packet is used to feed back a status of receiving a data packet from the data transmit end by the data receive end; and sending, by the data transmit end based on the first feedback packet, copies of a first data packet to the data receive end a plurality of times, to complete one round of retransmitting the first data packet, where the first data packet is a data packet that needs to be retransmitted by the data transmit end, and every two copies are sent at a random time interval.

In the foregoing solution, after it is determined that the first data packet is not received, in the one round of retransmission, redundant retransmission is performed a plurality of times, and every two copies are sent at the random time interval. It is clear that in the random time interval, the data transmit end may send another data packet, or wait for the random time interval. In this way, retransmitted data packets are not transmitted in a batch. This improves a retransmission success rate.

In a possible design, after the one round of retransmitting the first data packet is completed, the method further includes: determining again, by the data transmit end based on a second feedback packet sent by the data receive end, that the first data packet needs to be retransmitted; and sending, by the data transmit end, the copies of the first data packet to the data receive end a plurality of times, to complete another round of retransmitting the first data packet, where in the another round of retransmitting the first data packet, every two copies are still sent at a random time interval, and a quantity of times of retransmitting the copies of the first data packet in the another round of retransmission is greater than a quantity of times of retransmitting the copies of the first data packet in the one round of retransmission.

In the foregoing design, as a quantity of rounds of retransmission increases, a quantity of retransmission times of a retransmitted data packet gradually increases. This further improves the retransmission success rate.

In a possible design, the first feedback packet includes a blacklist, the blacklist is used to indicate missing data packets in the updated receive buffer, and the missing data packets are data packets that have been sent by the data transmit end and that have not been received by the data receive end.

In a possible design, the first feedback packet includes a whitelist, the whitelist is used to indicate several data packets received by the data receive end.

In a possible design, the first feedback packet includes a blacklist and a whitelist.

In a possible design, the first feedback packet includes a blacklist. When the first feedback packet is received from the data receive end, a third feedback packet is also received, where the third feedback packet includes the whitelist.

In a possible design, a quantity of times of retransmitting the first data packet in the one round is positively related to a sequence number of the round of retransmitting the first data packet.

In a possible design, the first feedback packet includes an amount of data stored in the receive buffer of the receive end, or a whitelist, the whitelist indicates a data packet stored in the receive buffer, and that the data transmit end sends, based on the first feedback packet, copies of a first data packet to the data receive end a plurality of times, to complete one round of retransmitting the first data packet includes: determining, by the data transmit end based on the first feedback packet, the first data packet and that a first data amount is less than a congestion window of the data transmit end, where the first data amount is an amount of data determined by the data transmit end based on an amount of data that has been sent to the data receive end and a second data amount, and the second data amount is the amount of data stored in the receive buffer or an amount of data that is of the data packet in the receive buffer and that is determined based on the whitelist; and sending, by the data transmit end, the copies of the first data packet to the data receive end the plurality of times, to complete the one round of retransmitting the first data packet.

On the contrary, when the first data amount is greater than or equal to the congestion window, it is forbidden to send the copies of the first data packet to the transmit end. To be specific, a quantity of bits of a data packet that has been sent and that has not been received by the receive end exceeds the congestion window. It indicates that a network status deteriorates and a packet loss rate is relatively high. Therefore, it is forbidden to send data to the receive end. In an existing solution, when a data packet is retransmitted, minimum values of an advertised window and the congestion window are compared with a quantity of data packets that have been sent to and that have not been acknowledged by the receive end. However, in this embodiment of this application, the advertised window is compared with a quantity of data packets that have been sent to the receive end and that have not been received by the receive end, to determine whether retransmission is performed. Some data packets that have been sent to and that have not been acknowledged by the receive end are received by the received end and stored in the receive buffer. However, the first data amount determined in this application excludes an amount of data that has been stored in the receive buffer, and then the first data amount is compared with the congestion window. Therefore, in comparison with the existing solution, an amount of data that can be sent is increased. Therefore, in this embodiment of this application, when a redundant retransmission manner is used, there is a maximum probability that a retransmitted data packet can be received by the receive end. When an opportunistic manner provided in this design is also used, this releases, to some extent, some receive buffers, to alleviate congestion.

According to a third aspect, an embodiment of this application provides a data transmission apparatus, including:
a receiving module, configured to receive a plurality of data packets from a data transmit end;
an updating module, configured to update a receive buffer of the data receive end based on the plurality of data packets; and
a sending module, used by the data receive end to send acknowledgment information to the data transmit end based on the updated receive buffer, where
the acknowledgment information includes a blacklist, or includes a blacklist and a whitelist, the blacklist is used to indicate missing data packets in the updated receive buffer, the missing data packets are data packets that have been sent by the data transmit end and that have not been received by the data receive end, the whitelist is used to indicate several data packets that have been received by the data receive end, and the several data packets include the plurality of data packets.

In a possible design, the whitelist includes an identifier of a data packet with the largest sequence number in the updated receive buffer, and the blacklist includes an identifier of a data packet with the smallest sequence number in the missing data packets.

In a possible design, the whitelist further includes an identifier of a data packet with a higher priority in the updated receive buffer, and a priority of a data packet is related to an importance degree of the data packet.

In a possible design, the sending module is specifically configured to: when a feedback condition is met, send the acknowledgment information to the data transmit end, where
the feedback condition includes one or more of the following:
a quantity of received data packets reaches a first threshold;
a quantity of received data bits reaches a second threshold; or
a time point of a feedback period is reached.

In a possible design, the blacklist includes an offset of a sequence number of a second data packet when a sequence number of a first data packet is used as a reference, the second data packet is any data packet in the missing data packets, and the first data packet is a data packet that has been received by the data receive end; or the whitelist includes an offset of a sequence number of a third data packet when a sequence number of the first data packet is used as a reference, and the third data packet is any data packet in the several data packets.

In a possible design, the missing data packets include N data packets with consecutive sequence numbers, and the blacklist further includes an offset of a sequence number of a data packet with the smallest sequence number and an offset of a sequence number of a data packet with the largest sequence number in the N data packets with consecutive sequence numbers; or the several data packets include N data packets with consecutive sequence numbers, and the whitelist further includes an offset of a sequence number of a data packet with the smallest sequence number and an offset of a sequence number of a data packet with the largest sequence number in the N data packets with consecutive sequence numbers, where N is an integer greater than 1.

In a possible design, the offset of the sequence number is encoded by using an M-bit unsigned integer, high L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number, and low M-L bits of the second unsigned integer is used to encode the offset of the sequence number of the data packet with the largest sequence number, where both M and L are integers greater than 1, and M is greater than L.

In a possible design, the acknowledgment information further includes an identifier of a data packet with the largest sequence number in data packets that have been acknowledged.

In a possible design, the acknowledgment information further includes an amount of data currently stored in the receive buffer.

In a possible design, the blacklist and the whitelist are encoded by using a bitmap encoding manner.

In a possible design, the missing data packets include N1 data packets with consecutive sequence numbers, and the blacklist includes a sequence number range from the smallest sequence number to the largest sequence number in the N1 sequence numbers, where N1 is an integer greater than 0; or the several data packets include N2 data packets with consecutive sequence numbers, and the whitelist includes a sequence number range from the smallest sequence number to the largest sequence number in the N2 sequence numbers, where N2 is an integer greater than 0.

In a possible design, the acknowledgment information includes the blacklist and the whitelist, and the sending module is specifically configured to: send a first feedback packet and a second feedback packet to the data transmit end, where the first feedback packet includes the blacklist, and the second feedback packet includes the whitelist.

According to a fourth aspect, an embodiment of this application provides a data transmission apparatus, including:
a receiving module, configured to receive a first feedback packet from a data receive end, where the first feedback packet is used to feed back a status of receiving a data packet from the data transmit end by the data receive end; and
a retransmission module, configured to send, based on the first feedback packet, copies of a first data packet to the data receive end a plurality of times, to complete one round of retransmitting the first data packet, where the first data packet is a data packet that needs to be retransmitted by the data transmit end, and every two copies are sent at a random time interval.

In a possible design, the retransmission module is further configured to determine again, based on a second feedback packet sent by the data receive end, that the first data packet needs to be retransmitted; and send the copies of the first data packet to the data receive end a plurality of times, to complete another round of retransmitting the first data packet, where in the another round of retransmitting the first data packet, every two copies are still sent at a random time interval, and a quantity of times of retransmitting the copies of the first data packet in the another round of retransmission is greater than a quantity of times of retransmitting the copies of the first data packet in the one round of retransmission.

In a possible design, the first feedback packet includes a blacklist, the blacklist is used to indicate missing data packets in the updated receive buffer, and the missing data packets are data packets that have been sent by the data transmit end and that have not been received by the data receive end.

In a possible design, a quantity of times of retransmitting the first data packet in the one round is positively related to a sequence number of the round of retransmitting the first data packet.

In a possible design, the first feedback packet includes an amount of data stored in the receive buffer of the receive end, or a whitelist, where the whitelist indicates a data packet stored in the receive buffer.

The retransmission module is specifically configured to: determine, based on the first feedback packet, the first data packet and that a first data amount is less than a congestion window of the data transmit end, where the first data amount is an amount of data determined by the data transmit end based on an amount of data that has been sent to the data receive end and a second data amount, and the second data amount is the amount of data stored in the receive buffer or an amount of data that is of the data packet in the receive buffer and that is determined based on the whitelist; and send the copies of the first data packet to the data receive end for the plurality of times, to complete the one round of retransmitting the first data packet.

According to a fifth aspect, an embodiment of this application provides a data transmission apparatus. The apparatus is applied to a data receive end, and includes a communications interface, a processor, and a memory. The memory is configured to store a software program, and the processor is configured to: read the software program stored in the memory, receive and send data through the communications interface, and implement the method in any one of the first aspect or the designs of the first aspect.

According to a sixth aspect, an embodiment of this application provides a data transmission apparatus. The apparatus is applied to a data transmit end, and includes a communications interface, a processor, and a memory. The memory is configured to store a software program, and the processor is configured to: read the software program stored in the memory, receive and send data through the communications interface, and implement the method in any one of the second aspect or the designs of the second aspect.

According to a seventh aspect, an embodiment of this application provides a data processing system. The system includes the apparatus in the third aspect and the apparatus in the fourth aspect. Alternatively, the system includes the apparatus in the fifth aspect and the apparatus in the sixth aspect.

According to an eighth aspect, an embodiment of this application further provides a computer storage medium. The storage medium stores a software program, and when the software program is read and executed by one or more processors, the method in any design of the first aspect or the second aspect can be implemented.

According to a ninth aspect, an embodiment of this application provides a computer program product including instructions. When the computer program product is run on a computer, the computer is enabled to perform the method in any design of the first aspect or the second aspect.

According to a tenth aspect, an embodiment of this application provides a chip. The chip is connected a memory, and is configured to read and execute a software program stored in the memory, to implement the method in any design of the first aspect or the second aspect.

It should be understood that technical solutions in the second aspect to the tenth aspect of this application are the same as or similar to those in the first aspect and the second aspect of this application, and beneficial effects achieved by the aspects and corresponding feasible implementations are similar. Details are not described again.

### BRIEF DESCRIPTION OF DRAWINGS

FIG. 1 is a schematic diagram of an architecture corresponding to an application scenario according to an embodiment of this application;
FIG. 2 is a schematic architectural diagram of a communications system according to an embodiment of this application;
FIG. 3 is a schematic flowchart of a data transmission method according to an embodiment of this application;
FIG. 4 is a schematic structural diagram of an ACK packet according to an embodiment of this application;
FIG. 5 is a schematic structural diagram of a DELTA.SEQ field according to an embodiment of this application;
FIG. 6 is a schematic diagram of a data packet arrival status according to an embodiment of this application;
FIG. 7 is a schematic structural diagram of another DELTA. SEQ field according to an embodiment of this application;
FIG. 8 is a schematic flowchart of a data transmission method according to an embodiment of this application;
FIG. 9 is a schematic flowchart of a redundant retransmission method according to an embodiment of this application;
FIG. 10 is a schematic flowchart of opportunistic transmission according to an embodiment of this application;
FIG. 11 is a schematic structural diagram of a data transmission apparatus applied to a receive end according to an embodiment of this application;
FIG. 12 is a schematic structural diagram of a data transmission apparatus applied to a transmit end according to an embodiment of this application;
FIG. 13 is a schematic structural diagram of a data transmission apparatus 1300 according to an embodiment of this application;
FIG. 14 is a schematic diagram of a test result of Scenario 1 according to an embodiment of this application; and
FIG. 15 is a schematic diagram of a test result of Scenario 2 according to an embodiment of this application.

### DESCRIPTION OF EMBODIMENTS

Solutions provided in embodiments of this application may be used in a plurality of communication scenarios such as end-to-end communication, end-cloud communication, and cloud-to-cloud communication. Therefore, a data receive end or a data transmit end in this application may be a terminal device (which may also be referred to as a terminal for short), for example, a sensor, a mobile phone, a tablet, a laptop computer, a personal computer, a vehicle-mounted terminal, a set-top box, or a television box; or may be a network device, for example, a gateway, an access router, a core router, a front-end router, a load balancer, or a server. For example, a device-to-device scenario may be that a mobile phone projects a video to a smart television, or to a display by using a television box or a receiver. For another example, if a video call is made between terminal devices by using an application, one of the terminals and a server of the application is a device-cloud scenario that is applicable to a method described in this application. It should be understood that both the data receive end and the data transmit end in this application are devices or operating systems. For example, the data receive end is, in a connection, a device that receives data or an operating system in the device that receives data, and the data transmit end is an end that transmits data in a connection. In this case, a same device may be a data receive end in a time period, and may be a data transmit end in another time period. Alternatively, because a device may be an end node of a plurality of connections, the device may both be a data receive end and a data transmit end. For ease of understanding, in this application, a path connecting a data transmit end to a data receive end is used as an example for description. It should be noted that, for ease of description, in subsequent descriptions, the data transmit end is referred to as a transmit end for short, and the data receive end is referred to as a receive end for short in the embodiments of this application.

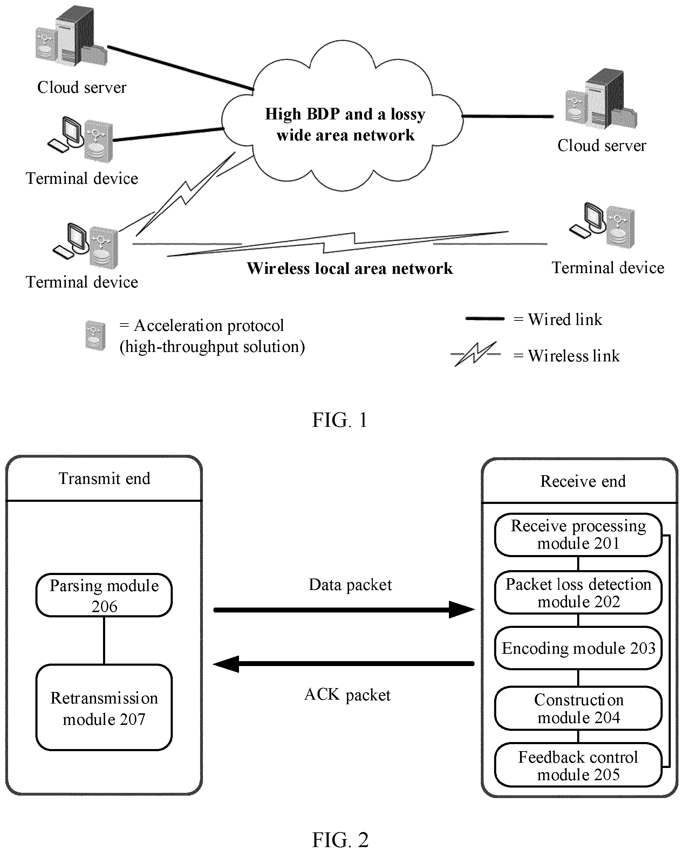

However, in some application scenarios of a high bandwidth-delay product (bandwidth-delay product, BDP), transmission acceleration of a lossy wide area network, or transmission acceleration of a wireless local area network (as shown in FIG. 1), effects are more noticeable. It should be noted that a network with a high bandwidth-delay product may also be referred to as a long fat network (long fat network, LFN). The application scenarios of the high BDP and the transmission acceleration of the lossy wide area network correspond to services such as a large amount of data uploaded on public cloud, data migration on hybrid cloud, a large amount of data distributed on a cross data center (cross data center, cross-DC), disaster recovery, data transmission between an enterprise headquarter and branch offices, 2K/4K video on demand, and live broadcast. 2K/4K represents that a total quantity of columns of video pixels is 2000 or 4000. On one hand, the services have urgent requirements for the transmission acceleration of the wide area network. On the other hand, applications such as high-definition video projection, wireless-based virtual reality, augmented reality, and mixed reality have urgent requirements for the transmission acceleration of the wireless local area network. Because a requirement for bandwidth is increasingly high in a case requires transmission acceleration, data packet transmission requires a high throughput.

The method described in this application is applicable to a plurality of transmission protocols, such as a transmission control protocol (transmission control protocol, TCP), a user datagram protocol (user datagram protocol, UDP), quick UDP internet connections (quick UDP internet connections, QUIC), and a stream control transmission protocol (stream control transmission protocol, STCP), and is even applicable to a subflow (subflow) in a multipath transmission scenario.

The transmission control protocol (transmission control protocol, TCP) is used as an example. In a conventional solution in which a packet loss is used as a congestion signal, for example, a CUBIC, when a non-congestion-triggered packet loss event occurs, backoff is performed improperly, and a bandwidth cannot be fully used. A TCP acceleration solution in which a packet loss is not used as a congestion signal, for example, a bottleneck bandwidth and round-trip propagation time (bottleneck bandwidth and round-trip propagation time, BBR) protocol, and a fill the pipe (fill the pipe, FillP) protocol, can fully use a bandwidth, and achieves a high throughput. Although the "high-throughput scenarios" can improve the throughput, another problem exists.

First, in the "high-throughput scenarios", effects of transmission acceleration are limited by a transmit buffer and a receive buffer. A size of the transmit buffer or receive buffer required for transmission is determined by a maximum quantity of times of retransmitting a data packet. In a same lossy network, a higher throughput leads to a larger maximum quantity of times of retransmitting a packet. The larger maximum quantity of times of retransmitting a packet leads to more buffers required for transmission. In an existing solution, impact of a limited buffer is eliminated mainly by adjusting a host buffer. However, in an actual application scenario, not all transmit and receive nodes can be modified. In addition, with increase of traffic and change of a network, a specific type of settings may not meet various requirements, and an essential problem is not resolved. Therefore, the key to resolve the problem of a limited buffer is to improve retransmission efficiency and reduce the maximum quantity of times of retransmitting a packet.

Second, "a high throughput" poses a new challenge to an ACK mechanism. In an existing ACK packet, one type of ACK can carry bytes with a limited length. For example, a total length of bytes does not exceed 40 bytes. Consequently, information about a successfully received data packet that can be carried is relatively limited. It can be learned from the foregoing description that due to increase of network complexity and service requirements, performance of an existing ACK packet sending mechanism still needs to be improved in terms of packet loss-triggered retransmission that limits improvement of data transmission performance.

Based on the foregoing description, the embodiments of this application provide a data transmission method and apparatus, to improve data transmission performance. The method and the apparatus are based on a same inventive concept. Because a problem-resolving principle of the method is similar to that of the apparatus, implementations of the apparatus and the method may refer to each other, and no repeated description is provided.

Before specific solutions in this application are described, the following describes technical concepts that may be used in the embodiments of this application.
(1) Whitelist: A whitelist is also referred to as a data packet whitelist, used to record information about data packets received by a receive end, for example, an identifier of the data packet. The identifier may be a sequence number or the like. Specifically, when receiving the data packets, the receive end usually first stores the data packets in a receive buffer, and then extracts the data packets from the receive buffer based on sequence numbers of the data packets and sends the data packets to an application layer. For example, when data packets whose sequence numbers are 1, 2, 3, and 5 have been received and stored in the receive buffer, the sequence numbers 1, 2, and 3 are consecutive, and the data packets whose sequence numbers are 1, 2, and 3 are extracted and sent to the application layer. However, a data packet whose sequence number is 4 has not been received yet, and the data packet whose sequence number is 5 is stored in the receive buffer, until the data packet whose sequence number is 4 is received. A data packet sent to the application layer is a data packet that is acknowledged. Therefore, a data packet that is stored in the receive buffer is a data packet that has been received and has not been acknowledged. The data packet whose sequence number is 5 belongs to the whitelist. In other words, the whitelist includes the sequence number 5. To be specific, the whitelist records data packets that have been received by the receive end and has not been sent to the application layer when the whitelist is formed, that is, data packets in the receive buffer.
(2) Blacklist: A blacklist is also referred to as a data packet blacklist, used to record a data packet that is not received by a receive end. For example, the data packet whose sequence number is 4 belongs to the blacklist.
(3) Maximum quantity of times of retransmitting a packet: A retransmitted data packet may be lost again, and the lost packet is retransmitted until the data packet is successfully received by the receive end. The maximum quantity of times of retransmitting a packet represents a maximum quantity of times of retransmitting a data packet on a path. A value of the maximum quantity of times of retransmitting a data packet on a path may be updated over time.
(4) Data path: A data path includes a link between a data transmit end and a data receive end. It may be considered that one path (path) includes one or more links (link).
(5) Reverse path: A reverse path is also referred to as a control path, that is, a path used to send a feedback packet (for example, an ACK packet), or a path including a link from a receive end to a transmit end. For a connection, a path for sending a data packet and a path for sending a feedback packet may correspond to different links.
(6) Opportunism: A retransmitted data packet is not limited by a size of a receive buffer when the data packet is sent in the embodiments of this application. A specific implementation is described in detail subsequently, and details are not described herein.

In addition, it should be noted that, in this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one (piece) of the following" or a similar expression thereof means any combination of these items, including any combination of singular items (pieces) or plural of items (pieces). For example, at least one (piece) of a, b, or c may represent: a, b, c, a and b, a and c, b and c, or a, b, and c, where a, b, and c may be singular or plural. It should be understood that although terms such as "first" and "second" may be used in the embodiments of this application to describe objects, the terms are merely used to distinguish the objects from each other.

FIG. 2 is a specific schematic architectural diagram of an example of a communications system according to an embodiment of this application. The communications system includes a transmit end and a receive end. For example, the receive end includes a receive processing module 201, a packet loss detection module 202, an encoding module 203, a construction module 204, and a feedback control module 205, and the transmit end includes a parsing module 206 and a retransmission module 207. It should be understood that an architecture in FIG. 2 is merely an example, and modules included in the receive end and the transmit end are not limited in this application. For example, packet loss detection may be performed at the transmit end, and the transmit end determines, by analyzing ACK of the receive end, a lost packet during transmission.

The receive processing module 201 receives a data packet from the transmit end, and buffers the received data packet into the receive buffer, that is, updates the receive buffer of the receive end based on a received data packet. The packet loss detection module 202 determines a blacklist and/or a whitelist based on a status of a buffered data packet in the receive buffer. In some embodiments, the packet loss detection module may also be configured in the transmit end, and the receive end may only acknowledge the whitelist. Then, the packet loss detection module in the transmit end may determine, based on the whitelist sent by the transmit end, a lost data packet that needs to be retransmitted. The encoding module 203 encodes the whitelist and/or the blacklist determined by the packet loss detection module 202. In some embodiments, the encoding module 203 may use a manner for marking a sequence number of a start data packet and a sequence number of an end data packet. Alternatively, a bitmap encoding manner is used, where 0 represents that a data packet does not arrive, and 1 represents that a data packet has arrived. Alternatively, an integer encoding manner is used, where a sequence number of a data packet is used as a reference, and an offset (integer) of the sequence number indicates the data packet, to reduce space occupation. An encoding manner used by the encoding module 203 is described in detail in a subsequent embodiment, and details are not described herein. The construction module 204 constructs an ACK packet, where the constructed ACK packet carries the blacklist and/or the whitelist. In some embodiments, the construction module 204 may use a left boundary data packet (a data packet with the smallest sequence number in the receive buffer) in the receive buffer as a reference, and add the blacklist and/or the whitelist to the ACK packet based on a priority. For example, the ACK packet may be constructed preferentially by using an identifier of a data packet with the smallest sequence number in the blacklist, or by using an identifier of a data packet with the largest sequence number in the whitelist, or by using identifiers of a plurality of data packets with the smallest sequence numbers in the blacklist and identifiers of a plurality of data packets with the largest sequence numbers in the whitelist. For example, during ACK packet construction, if several data packets in the blacklist or the whitelist are consecutive, the ACK packet may be constructed based on only the blacklist, or based on the whitelist. In this way, the transmit end may infer another list by using one list. For example, the whitelist may be inferred by using the blacklist. In some embodiments, the ACK packet may further include an amount of data stored in the receive buffer. The feedback control module 205 sends the ACK packet to the transmit end through a reverse path. In some embodiments, the feedback control module 205 may use event-based (event-based) feedback control, for example, typical packet-by-packet ACK packet feedback of a TCP, that is, returning one ACK packet each time a specific quantity of data packets is received, or feeding back an ACK packet each time a specific quantity of data packets is received. Alternatively, timer-based (timer-based) feedback control is used, for example, active and periodical ACK packet feedback of the FillP, that is, returning one ACK packet at a specific time interval. Alternatively, time-based feedback control and timer-based feedback control may be combined, that is, returning an ACK packet provided that either of the two conditions is met.

After receiving the ACK packet, the transmit end parses the ACK packet by using the parsing module 206, to obtain a parsed whitelist and/or blacklist. Specifically, the parsing module 206 reads a packet header and a data field of the ACK packet. For example, when the encoding module 203 uses an integer encoding manner, the parsing module 206 may obtain an encoded blacklist and/or whitelist based on an offset defined in the ACK packet. Decoding is performed according to an encoding rule, to obtain information such as the blacklist and/or the whitelist, and the amount of data stored in the receive buffer. The retransmission module 207 determines, based on the whitelist and/or the blacklist, a lost data packet during transmission, to retransmit the lost data packet. In some embodiments, the retransmission module 207 performs, in an opportunistic manner, random retransmission on a data packet that needs to be retransmitted. The method and the apparatus described in this application may relate to improvement of only some of the foregoing modules, and some other modules may use an existing technology.

The following describes a specific solution provided in this application.

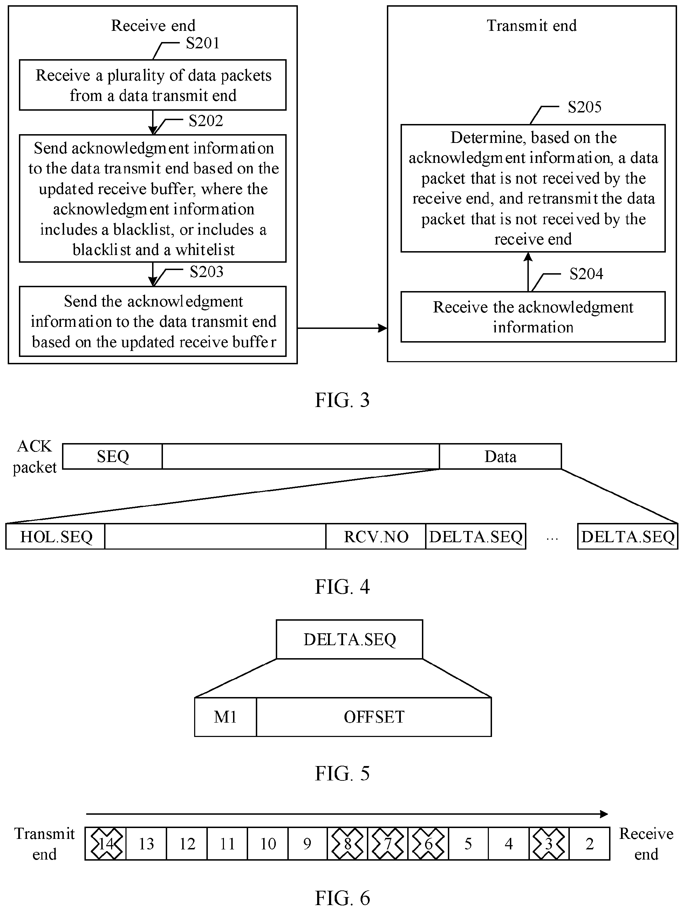

FIG. 3 is a schematic flowchart of a data transmission method according to an embodiment of this application. The method may include S201, S202, and S203, and may further include S204 and S205.

S201: A receive end receives a plurality of data packets from a data transmit end.

For example, the receive end receives the data packets from the transmit end through a transmission layer.

S202: The receive end updates a receive buffer of the data receive end based on the plurality of data packets. The receive buffer includes a data packet that has been received and has not been acknowledged.

For example, the transmit end sends 10 data packets, and sequence numbers of the 10 data packets are 1 to 10. Due to a packet loss, the receive end may receive only 5 data packets whose sequence numbers are 1, 4, 5, 6, and 10. The receive end stores the received 5 data packets in the receive buffer, and uploads the data packets to an application layer in an order of the sequence numbers. The data packet whose sequence number is 1 is uploaded to the application layer. Because the receive buffer does not include the data packets whose sequence numbers are 2 and 3, the data packets whose sequence numbers are 4, 5, 6, and 10 are not uploaded to the application layer. When the data packets whose sequence numbers are 2 and 3 are received, the data packets whose sequence numbers are 2 to 6 are uploaded to the application layer. When the data packets whose sequence numbers are 7 to 9 are received, the data packets whose sequence numbers are 7 to 10 are uploaded to the application layer.

S203: The receive end sends acknowledgment information to the data transmit end based on the updated receive buffer, where the acknowledgment information includes a blacklist, or includes a blacklist and a whitelist.

The whitelist is used to indicate several data packets received by the receive end, for example, the several data packets include the plurality of data packets. For another example, the whitelist indicates a data packet stored in the updated receive buffer. The blacklist is used to indicate missing data packets in the updated receive buffer, where the missing data packets are data packets that have been sent by the data transmit end and that have not been received by the data receive end.

For example, the whitelist includes identifiers of K1 data packets with the largest sequence number in the updated receive buffer, and the blacklist includes identifiers of K2 data packets with the smallest sequence number in the missing data packets, where both K1 and K2 are integers greater than 0.

For example, the transmit end sends 10 data packets, and sequence numbers of the 10 data packets are 1 to 10. Due to a packet loss, the receive end receives only 5 data packets whose sequence numbers are 1, 4, 5, 6, and 10. The receive end stores the received 5 data packets in the receive buffer, and uploads the data packets to the application layer in an order of the sequence numbers. The data packet whose sequence number is 1 is uploaded to the application layer. The receive buffer includes the data packets whose sequence numbers are 4, 5, 6, and 10. The data packets that are not successfully received includes the data packets whose sequence numbers are 2, 3, 7, 8, and 9. Based on the foregoing description, the whitelist may include identifiers of the data packets whose sequence numbers are 4, 5, 6, and 10, and the blacklist may include identifiers of the data packets whose sequence numbers are 2, 3, 7, 8, and 9. For example, when a total length of the acknowledgment information is relatively short, for example, when both K1 and K2 are 2, the whitelist may include the identifiers of the data packets whose sequence numbers are 6 and 10, and the blacklist may include only the identifiers of the data packets whose sequence numbers are 2 and 3.

In the solution provided in this application, the acknowledgment information includes the blacklist, or includes the blacklist and the whitelist. To be specific, the receive end feeds back the acknowledgment information, to notify, in time, the transmit end of identifiers of a plurality of data packets that are not received by the receive end. In this way, the transmit end may retransmit the data packets to the receive end in time instead of retransmitting the data packets until a time expires. This improves data transmission performance. In addition, the receive end indicates the whitelist to the transmit end, so that the transmit end can learn, in time, of a data packet newly received by the transmit end. This avoids, to some extent, a bandwidth waste caused by invalid retransmission (namely, retransmission of a data packet that has been received) of the transmit end.

In an example, in this embodiment of this application, the following principles may be followed during ACK packet construction. In a specific implementation, any one or more of the following principles may be selected.

Principle 1: Carry identifiers of data packets in the blacklist (whitelist) as many as possible.

Principle 2: Add, to the ACK packet by using a left boundary data packet (a data packet with the smallest sequence number in the receive buffer) in the receive buffer as a reference, an identifier of an oldest data packet in the blacklist and an identifier of a latest data packet in the whitelist.

The oldest data packet is a data packet with the smallest sequence number in the blacklist. The latest data packet is a data packet with the largest sequence number in data packets that have been received and that have not been acknowledged, that is, a data packet with the largest sequence number in the receive buffer.

Principle 3: When storage space used to store the blacklist and the whitelist in the ACK packet is relatively large, add, in the storage space, identifiers of latest K1 data packets in the whitelist and/or identifiers of oldest K2 data packets in the blacklist. For another example, a priority is defined for a data packet based on an importance degree, and packets (for example, an out-of-order packet, a retransmitted packet, and a head-of-line packet with high priorities) in remaining space is added to the whitelist based on priorities. In other words, in this embodiment of this application, the whitelist that is sent to the transmit end may further include identifiers of K3 data packets with the highest priorities in the receive buffer, where a priority of a data packet is related to an importance degree of the data packet. A K3 quantity is related to the remaining space.

The out-of-order packet is a data packet that arrives at a receive end without following an order of sequence numbers. For example, there are 4 data packets whose sequence numbers are 1, 2, 3, and 4. If an order of the sequence numbers of the data packets arriving at the receive end is 1, 3, 4, and 2, the data packet whose sequence number is 2 is an out-of-order packet.

A retransmitted packet is a data packet that has been retransmitted by the transmit end and that has been received by the receive end.

A head-of-line packet is a data packet with the smallest sequence number in data packets that have been received by the receive end.

In an example, the blacklist and the whitelist may be fed back to the transmit end by using one feedback packet (which is also referred to as an ACK packet), or the blacklist and the whitelist may be fed back to the transmit end by using different feedback packets. For example, a first feedback packet includes the blacklist, and a second feedback packet includes the whitelist.

In this embodiment of this application, a sequence number of a data packet may be used to indicate whether the corresponding data packet is successfully received. In other words, the blacklist and the whitelist are encoded based on the sequence number of the data packet.

In an example, a manner of a front-to-end sequence (sequence, SEQ) number is used for encoding. A front boundary sequence number is the smallest sequence number in sequence numbers of a plurality of data packets with consecutive sequence numbers, and an end boundary sequence number is the largest sequence number in sequence numbers of a plurality of data packets with consecutive sequence numbers. It should be understood that, if one single sequence number is not adjacent to another sequence number, a front boundary sequence number is the same as an end boundary sequence number.

Specifically, the data packets stored in the updated receive buffer include N1 data packets with consecutive sequence numbers, and the whitelist may include a sequence number range from the smallest sequence number to the largest sequence number in the N1 sequence numbers, where N1 is an integer greater than 0. The missing data packets include N2 data packets with consecutive sequence numbers, and the blacklist includes a sequence number range from the smallest sequence number to the largest sequence number in the N2 sequence numbers, where N2 is an integer greater than 0.

It should be understood that when N1 is equal to 1, the whitelist includes one sequence number. Alternatively, when N2 is equal to 1, the blacklist includes one sequence number. For example, the whitelist includes data packets whose sequence numbers are 4, 5, 6, and 10, and the blacklist includes data packets whose sequence numbers are 2, 3, 7, 8, and 9. [4, 6] and [10] represent an encoded whitelist, and [2, 3] and [7, 9] represent an encoded blacklist.

In another example, a bitmap encoding manner may be used for encoding. For example, the whitelist includes data packets whose sequence numbers are 4, 5, 6, and 10, and the blacklist includes data packets whose sequence numbers are 2, 3, 7, 8, and 9. The blacklist and the whitelist may be encoded into an ACK packet and fed back to the transmit end, for example, [001110001], where 1 represents the data packet in the whitelist, and 0 represents the data packet in the blacklist.

In still another example, a flagged relative integer encoding (flagged relative integer coding) manner may be used to encode the blacklist and the whitelist.

For example, the blacklist includes an offset of a sequence number of a second data packet when a sequence number of a first data packet is used as a reference, the second data packet is any data packet in the missing data packets, and the first data packet is a data packet that has been received by the data receive end; or the whitelist includes an offset of a sequence number of a third data packet when a sequence number of the first data packet is used as a reference, and the third data packet is any data packet in the several data packets.

For example, the first data packet may be a data packet with the smallest sequence number in the updated receive buffer. In other words, a minimum value of sequence numbers of data packets in the receive buffer is used as a reference for encoding.

The data packets stored in the receive buffer or the missing data packets in the receive buffer may include N data packets with consecutive sequence numbers. In one manner, the data packets with consecutive sequence numbers are not considered, and an offset corresponding to each data packet is encoded. In another manner, to reduce resources used for encoding, only the smallest sequence number and the largest sequence number in the N data packets with consecutive sequence numbers may be encoded when the blacklist and whitelist are encoded. For example, the N data packets with consecutive sequence numbers are indicated by using an offset of the smallest sequence number and an offset of the largest sequence number in the N data packets with consecutive sequence numbers. For example, the blacklist includes identifiers of N data packets with consecutive sequence numbers, and during ACK packet encoding, an offset of the smallest sequence number in N sequence numbers and an offset of the largest sequence number in N sequence numbers may be used to indicate the N data packets with consecutive sequence numbers, where N is an integer greater than 1.

In an example, an offset of a sequence number may be encoded by using an M-bit unsigned integer.

Example 1: An offset of a sequence number occupies M bits of an unsigned integer. Example 1 is applicable to a case in which data packets with consecutive sequence numbers are not considered, that is, each data packet is encoded.

Example 2: Offsets of a plurality of data packets with consecutive sequence numbers are encoded in a head-tail manner. Specifically, an offset of the smallest sequence number and an offset of the largest sequence number in N data packets with consecutive sequence numbers may be encoded in the following encoding manner:

The offset of the smallest sequence number and the offset of the largest sequence number are encoded by using two adjacent unsigned integers. High L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number in the N data packets with consecutive sequence numbers, and low M-L bits of the second unsigned integer are used to encode the offset of the sequence number of the data packet with the largest sequence number in the N data packets with consecutive sequence numbers, where both M and L are integers greater than 1, and M is greater than L. For example, M is equal to 32, and L is equal to 1. In an example, the first value is 1, and the second value is 0. The unsigned integer whose high L bits are the first value indicates a start data packet in a plurality of consecutive data packets, and a next unsigned integer (whose high L bits are the second value) indicates data packets that are N consecutive data packets in the whitelist or N consecutive data packets in the blacklist. Alternatively, the first value may be 0, and the second value is 1.

In Example 2, high L bits of an unsigned integer that indicates other data packets with inconsecutive sequence numbers may alternatively be the second value, or may be another value.

Example 3: When the blacklist and the whitelist can be used to encode a same ACK packet, and an offset of a sequence number of each data packet is encoded, high d bits of an M-bit unsigned integer are used to indicate a data packet included in the whitelist or a data packet included in the blacklist. For example, when the high d bits are a third value, the high d bits indicate a data packet included in the whitelist. When the high d bits are a fourth value, the high d bits indicate a data packet included in the blacklist. For example, d is equal to 1. In an example, the third value is 1, and the fourth value is 0. Alternatively, the third value is 0, and the fourth value is 1.

Example 4: When the blacklist and the whitelist can be encoded in a same ACK packet, and offsets of a plurality of data packets with consecutive sequence numbers are encoded in a head-tail manner, in high T bits of an M-bit unsigned integer, d bits of the high T bits is used to indicate a data packet included in the whitelist or a data packet included in the blacklist, and L bits is used to indicate whether the data packet indicated by the unsigned integer is a start data packet (the first data packet) in the plurality of data packets with consecutive sequence numbers, where d + L = T. Low M-T bits are used to encode the offset of the sequence number of the data packet.

In an example, the acknowledgment information further includes an identifier (for example, a sequence number, or an offset of a sequence number) of a data packet with the largest sequence number in data packets that have been acknowledged. In other words, the acknowledgment information further includes a maximum value of sequence numbers of data packets that have been sent to the application layer.

FIG. 4 is an example of a format of an ACK packet. For example, the unsigned integer is 32 bits. The packet header carries a 32-bit SEQ field. It represents a maximum value of sequence numbers of data packets that have been sent to the application layer, that is, the largest sequence number in sequence numbers of consecutive data packets. A data field carries a 32-bit HOL_SEQ. The HOL_SEQ field represents a minimum value of sequence numbers of data packets in the receive buffer and the minimum value of the sequence numbers of the data packets in the receive buffer is used as a reference for encoding. A plurality of 32-bit DELTA_SEQ fields are carried. An offset of a sequence number is represented by OFFSET. OFFSET is an unsigned integer ranging from 1 to (2^31-1), and is included in DELTA_SEQ.

FIG. 5 is an example of a format of DELTA_SEQ by using an example in which the encoding manner shown in Example 2 is used, and only the blacklist is encoded in an ACK packet. In FIG. 5, a first bit is represented by M1. DELTA_SEQ is defined as follows: If a first bit of DELTA_SEQ is 0, it indicates that a data packet corresponding to HOL_SEQ+OFFSET is lost. If a first bit of DELTA_SEQ is 1, it indicates that packets from a packet corresponding to HOL_SEQ+OFFSET to a packet corresponding to next HOL_SEQ+OFFSET (the first bit of DELTA-SEQ is 0) are lost.

For example, FIG. 6 shows an arrival status of data packets in the receive buffer. Data packets whose sequence numbers are 2, 4, 5, and 9 to 13 are received by the receive end, but data packets whose sequence numbers are 3, 6 to 8, and 14 are lost. Information carried in four DELTA_SEQ fields in an ACK packet is 0x00000003, 0x80000006, 0x00000008, and 0x0000000E. The information carried in the four DELTA_SEQ fields indicates that the data packets whose offsets of the sequence numbers are 3, 6 to 8, and 14 are all lost.

In an example, the ACK packet may further include a quantity of bits used to indicate a data packet in the current receive buffer, and the quantity of bits is used by the transmit end to subsequently update a quantity of bits of a data packet that has been sent but has not been acknowledged. For example, FIG. 3 shows an RCV.NO field, used to indicate a quantity of bits of a data packet in the receive buffer.

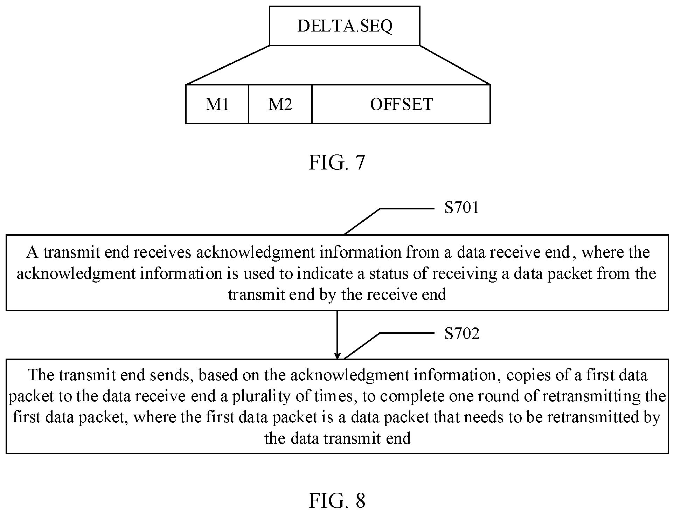

FIG. 7 is an example of a format of DELTA_SEQ by using an example in which the encoding manner shown in Example 4 is used, and the blacklist and the whitelist are encoded in an ACK packet. In FIG. 7, a first bit of DELTA_SEQ is represented by M1, and a second bit is represented by M2. DELTA_SEQ is defined as follows: A first bit of DELTA_SEQ is used to indicate whether information carried by the ACK packet is included in the blacklist. For example, if the first bit of DELTA_SEQ is 1, it indicates a data packet included in the blacklist. If the first bit of DELTA-SEQ is 0, it indicates a data packet included in the whitelist. Alternatively, if the first bit of DELTA _SEQ is 0, it indicates a data packet included in the blacklist. If the first bit of DELTA _SEQ is 1, it indicates a data packet included in the whitelist. A second bit of DELTA_SEQ is used to indicate whether the data packet is the first data packet of consecutive data packets. For example, if the second bit of DELTA SEQ is 0, it indicates that the data packet is not the first data packet of the consecutive data packets. If the second bit of DELTA_SEQ is 1, it indicates that the data packet is the first data packet of the consecutive data packets. To be specific, if the second bit of DELTA _SEQ is 0, it indicates that a data packet corresponding to HOL_SEQ+OFFSET is lost. If the second bit of DELTA_SEQ is 1, it indicates a plurality of consecutive data packets from a packet corresponding to HOL_SEQ+OFFSET to a packet corresponding to next HOL_SEQ+OFFSET (the first bit of DELTA-SEQ is 0) are lost.

For example, the first bit of 1 in DELTA_SEQ indicates a data packet included in the blacklist, the first bit of 0 in DELTA _SEQ indicates a data packet included in the whitelist, the second bit of 0 in DELTA_SEQ indicates a data packet that is not the first data packet in consecutive data packets, and the second bit of 1 in DELTA_SEQ indicates the first data packet in consecutive data packets. FIG. 5 shows an arrival status of data packets in the receive buffer. Information carried in nine DELTA_SEQ fields in an ACK packet is 0x00000002, 0x80000003, 0x00000004, 0x00000005, 0xC0000006, 0x80000008, 0x40000009, 0x0000000D, and 0x8000000E. The information carried in the nine DELTA_SEQ fields indicates that the data packets whose offsets of sequence numbers are 3, 6 to 8, and 14 are all lost, and the data packets whose sequence numbers are 2, 4, 5, and 9 to 13 are successfully received but not acknowledged.

In an example, the ACK packet may further include an amount of data currently stored in the receive buffer, and an amount of data that is used by the transmit end to subsequently update a data packet that has been sent but has not been acknowledged. For example, FIG. 4 shows the RCV.NO field, used to indicate an amount of data currently stored in the receive buffer.

S204: The transmit end receives the acknowledgment information.

Specifically, the transmit end parses information carried in the received ACK packet. The ACK packet shown in FIG. 4 is used as an example. [SEQ, HOL. SEQ] fields jointly indicate an interval of a sequence number of the oldest data packet included in the blacklist, RCV.NO indicates a quantity of bits byte received (which is also referred to as an amount of data) of an out-of-order packet in the current receive buffer, used to subsequently update a quantity of bits of a data packet that has been sent but has not been acknowledged, and DELTA.SEQ indicates an offset of a sequence number of another data packet other than the oldest data packet included in the blacklist or an offset of a sequence number of a data packet included in the whitelist. The transmit end decodes DELTA. SEQ. [HOL.SEQ, DELTASEQ] fields jointly indicate a sequence number of a data packet, and the data packet may be a data packet in the blacklist or a data packet in the whitelist.

In a possible implementation, that the receive end sends acknowledgment information to the data transmit end may be implemented in the following manner.

When a feedback condition is met, the data receive end sends the acknowledgment information to the data transmit end.

The feedback condition includes one or more of the following:
a quantity of received data packets reaches a first threshold;
a quantity of received data bits reaches a second threshold; or
a time point of a feedback period is reached.

For example, the acknowledgment information may be sent by using one feedback packet, and the feedback packet carries the blacklist and/or the whitelist. When the acknowledgment information includes the blacklist and the whitelist, the acknowledgment information may be sent by using two feedback packets. For example, the first feedback packet includes the blacklist, and the second feedback packet includes the whitelist.

S205: The transmit end determines, based on the acknowledgment information, a data packet that is not received by the receive end, and retransmits the data packet that is not received by the receive end.

Specifically, when retransmitting the data packet that is not received by the receive end, the transmit end may use a redundant retransmission manner. Redundant retransmission means that in a round of retransmitting a data packet, copies of the data packet that needs to be retransmitted are repeatedly sent a plurality of times. Data content of a copy of a data packet is the same as that of the data packet.

FIG. 8 is a schematic flowchart of a data transmission method (a redundant retransmission manner) according to an embodiment of this application.

S701: A transmit end receives acknowledgment information from a data receive end, where the acknowledgment information is used to indicate a status of receiving a data packet from the transmit end by the receive end.

In an example, the acknowledgment information may include only a whitelist, and the whitelist is carried in a feedback packet, that is, an existing manner of feeding back an ACK packet is used.

In another example, the acknowledgment information may include a blacklist. The blacklist is carried in a feedback packet.

In another example, the acknowledgment information may include a blacklist and a whitelist. The blacklist and the whitelist are carried in one feedback packet. Alternatively, the blacklist may be carried in a first feedback packet, and the whitelist may be carried in a second feedback packet.

S702: The transmit end sends, based on the acknowledgment information, copies of a first data packet to the data receive end a plurality of times, to complete one round of retransmitting the first data packet, where the first data packet is a data packet that needs to be retransmitted by the data transmit end.

In the solution provided in this embodiment of this application, after it is determined that the first data packet is not received, in the one round of retransmission, redundant retransmission is performed a plurality of times, and every two copies are sent is at the random time interval. It is clear that in the random interval, the data transmit end may send another data packet, or wait for the random time interval. In this way, retransmitted data packets are not transmitted in a batch. This improves a retransmission success rate.

When redundant retransmission is performed, in the first example, a quantity of times of retransmitting the first data packet in each round of retransmission may be the same. For example, in the first round of retransmitting the first data packet, the first data packet is retransmitted for two times. After the first round of retransmitting the first data packet, the receive end does not receive the first data packet. In this case, in the second round of retransmitting the first data packet, the first data packet is also retransmitted for two times.

In the second example, as a quantity of rounds of retransmission increases, a quantity of times of retransmitting a data packet correspondingly increases. In other words, the quantity of times of retransmitting the data packet is positively related to the quantity of rounds of retransmitting the data packet.

In the second example, the quantity of times of retransmission has an association relationship with the quantity of rounds of retransmission. For example, when a sequence number of a round of retransmission is n, that is, in an n^{th} round of retransmitting a data packet, copies of the data packet is retransmitted for 2n-1 times.

In an example, when the second example is used, before each round of retransmitting the first data packet, the quantity of times of sending copies of the first data packet in this round may be determined based on the association relationship between the quantity of times of retransmission and the sequence number of the round of retransmission.

In a possible implementation, a plurality of data packets retransmitted in one round may be randomly allocated to a plurality of different time periods for sending. In other words, in one round of retransmission, every two copies of the first data packet are sent at a random time interval. This alleviates increase of a packet loss rate caused by consecutive packet losses, and further ensures quick recovery of a data loss. Based on the foregoing description, that the transmit end repeatedly sends copies of the first data packet to the receive end M times in the one round of retransmission may be implemented in the following manner.

The transmit end randomly generates an interval at which every two copies of the M copies of the first data packet are sent, to obtain M-1 sending intervals; and the transmit end repeatedly sends, based on the M-1 sending intervals that are generated randomly, the copies of the first data packet to the receive end M times.

In an example, in one round of retransmission, the transmit end sends copies of the first data packet three times. An interval between sending of the first copy and sending of the second copy is 0.1s, and an interval between sending of the second copy and sending of the third copy is 0.25s. The copies of the first data packet that are sent three times are not sent continuously. This reduces, to some extent, a probability that a retransmitted packet is lost again due to consecutive packet losses on a link.

It should be understood that if it is determined that the first data packet is received by the receive end after retransmission, the first data packet does not need to be retransmitted (that is, retransmission stops).

In an example, when determining the quantity of times of retransmitting the first data packet in one round of retransmission, the transmit end may determine the quantity of times based on a redundant retransmission level. The redundant retransmission level is related to a network status. In other words, the redundant retransmission level may be determined based on a current network status.

For example, the network status may be reflected by using a packet loss rate, jitter, a queuing delay, a receive window size, and the like. Further, the transmit end may determine the redundant retransmission level based on at least one of the packet loss rate, the jitter, the queuing delay, and the receive window size, that is, determine an association relationship between a quantity of times of redundant retransmission and the sequence number of a round of retransmission. Different redundant retransmission levels correspond to different association relationships. There may be a plurality of combinations of the packet loss rate, the jitter, the queuing delay, and the receive window size. Some of the combinations are described as examples below.

In a possible example, the transmit end may determine the redundant retransmission level based on a packet loss rate detected in a transmission process. For example, if the packet loss rate is greater than 5%, the redundant retransmission level is determined as a high redundancy level. If the packet loss rate is between 1% and 5%, the redundant retransmission level is determined as a medium redundancy level. If the packet loss rate is less than 1%, the redundant retransmission level is determined as a low redundancy level.

In another possible example, the transmit end may determine the redundant retransmission level based on a queuing delay of a data packet detected in a transmission process. For example, if the queuing delay is greater than 15 times of a round-trip time (Round-Trip Time, RTT), the redundant retransmission level is determined as a high redundancy level. If the queuing delay is greater than 5 times of RTT and less than 15 times of RTT, the redundant retransmission level is determined as a medium redundancy level. If the queuing delay is less than 5 times of RTT, the redundant retransmission level is determined as a low redundancy level.

In still another possible example, the transmit end may determine the redundant retransmission level based on a receive window size detected in a transmission process. For example, if the receive window size is less than 5% of a total window size, the redundant retransmission level is determined as a high redundancy level. If the receive window size is between 5% and 15% of a total window size, the redundant retransmission level is determined as a medium redundancy level. If the packet loss rate is greater than 15% of a total window size, the redundant retransmission level is determined as a low redundancy level.

In yet another possible example, the transmit end may determine the redundant retransmission level based on a packet loss rate and a queuing delay of a data packet detected in a transmission process. For example, if the packet loss rate is greater than 5% and the queuing delay is greater than 15 times of RTT, the redundant retransmission level is determined as a high redundancy level. If the packet loss rate is between 1% and 5% and the queuing delay is greater than 5 times of RTT and less than 15 times of RTT, the redundant retransmission level is determined as a medium redundancy level. In another case, the redundant retransmission level is determined as a low redundancy level.

The following shows an example of the association relationship that corresponds to the redundant retransmission level between the quantity of times of redundant retransmission and the sequence number of a round of retransmission. In the following example, the redundant retransmission level is classified into three levels. It is clear that the redundant retransmission level may alternatively be divided into two or more levels. This is not specifically limited in this embodiment of this application.

Low redundancy level: In an n^{th} round of retransmitting one data packet, copies of the data packet are sent for n times.

Medium redundancy level: In an n^{th} round of retransmitting one data packet, copies of the data packet are sent for 2n-1 times.

High redundancy level: In an n^{th} round of retransmitting one data packet, copies of the data packet are sent for 3n-2 times.

For example, different redundant retransmission levels can ensure that there is no redundancy in a first round of transmission, that is, a data packet is sent once in the first round of transmission.

For example, a data packet is retransmitted in a third round. If the redundant retransmission level is determined as a high redundancy level based on a network status, in the third round of retransmission, copies of the data packet may be retransmitted seven times. If a high redundancy level is determined as a low redundancy level based on a network status, in the third round of retransmission, copies of the data packet may be retransmitted three times.

In a possible implementation, in this embodiment of this application, whether to perform redundant retransmission may be further determined based on a network status. In this embodiment of this application, whether to perform redundant retransmission may be determined based on at least one of a packet loss rate, jitter, a queuing delay, and a receive window size. For example, whether redundant retransmission is performed is determined based on the packet loss rate detected in a transmission process. For example, if the packet loss rate is less than 1%, redundant retransmission is not performed. If the packet loss rate is greater than or equal to 1%, redundant retransmission is performed.

For example, in this embodiment of this application, a retransmission list may be established, for example, the retransmission list is referred to as a redunList. When it is determined that a data packet needs to be retransmitted, an identifier (for example, a sequence number) of the data packet that needs to be retransmitted (a retransmitted packet for short) may be added to the retransmission list. When the M-1 intervals at which the retransmitted packet is sent are randomly generated, the M-1 sending intervals may be added to the retransmission list. The data packet is retransmitted based on the retransmission list.

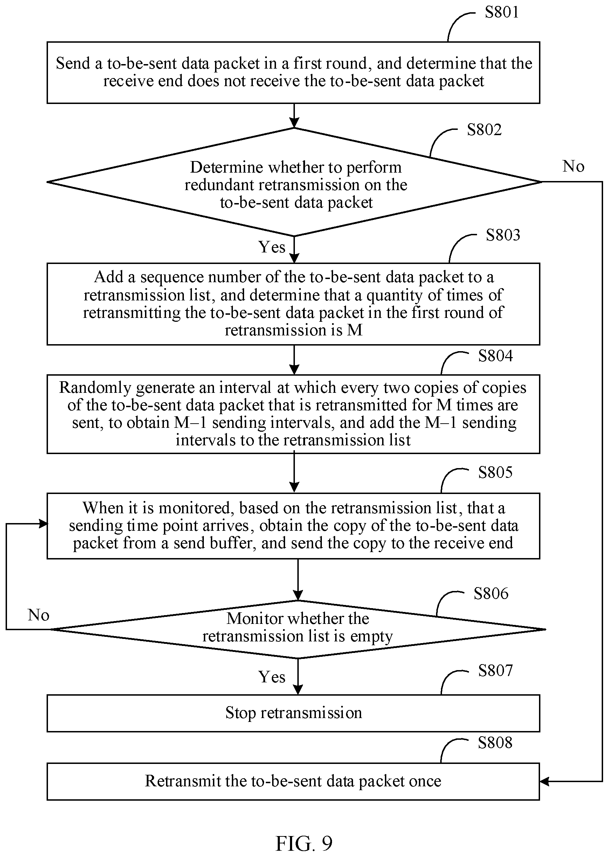

FIG. 9 provides descriptions in detail of a redundant retransmission manner by using the redunList as an example.

S801: Send a to-be-sent data packet in a first round, and determine that the receive end does not receive the to-be-sent data packet.

S802: Determine whether to perform redundant retransmission on the to-be-sent data packet. If it is determined that redundant retransmission is performed on the to-be-sent data packet, S803 is performed. If it is determined that redundant retransmission is not performed on the to-be-sent data packet, S808 is performed.

S803: Add a sequence number of the to-be-sent data packet to the retransmission list, and determine that a quantity of times of retransmitting the to-be-sent data packet in the first round of retransmission is M.

S804: Randomly generate an interval at which every two copies of copies of the to-be-sent data packet that is retransmitted for M times are sent, to obtain M-1 sending intervals, and add the M-1 sending intervals to the retransmission list.

S805: When it is monitored, based on the retransmission list, that a sending time point arrives, obtain the copy of the to-be-sent data packet from a send buffer, and send the copy to the receive end.

S806: Monitor whether the retransmission list is empty, where if the retransmission list is empty, S805 is performed, or if the retransmission list is not empty, S807 is performed.

S807: Stop retransmission.

S808: Retransmit the to-be-sent data packet once.

In an existing technology, the transmit end determines, by using the ACK packet, that a packet needs to be retransmitted, and the to-be-retransmitted packet is retransmitted only once in one round of retransmission. Once the to-be-retransmitted packet is lost, the transmit end needs to wait for the ACK packet to indicate a next round of retransmission for a next time. The receive end may receive the to-be-retransmitted packet only in the next round of retransmission. This aggravates congestion. Based on the foregoing design, when a data packet is retransmitted, during each round of retransmission, redundant retransmission is performed on the retransmitted packet a plurality of times, and a time interval between every two times of retransmission is random. A case in which a retransmitted data packet and an ACK packet are lost due to an unstable network is considered. The foregoing problem is not resolved merely based on periodic indication of a retransmitted packet by an ACK packet. This improves a probability that the receive end receives a retransmitted packet, and increases a retransmission success rate.

An advertised window (advertised window, AWND) is remaining space of a receive buffer of the receive end and is expressed in a quantity of bits. The receive end feeds back the advertised window to the transmit end, to limit an amount of data sent by the transmit end to a network, and prevent the buffer of the receive end from being filled up. For example, if a congestion window (CWND) of the transmit end is 10 MB, but the advertised window is 6 MB, the transmit end can only select a smaller value of the two values in the existing technology, that is, send data of a maximum of 6 MB to the network.

In a packet loss recovery phase, a link is basically idle. To improve bandwidth utilization, in the packet loss recovery phase, the link may not be limited by the AWND. In this embodiment of this application, a manner of sending an excess data packet may be used. Because the receive buffer is limited, the transmit end can send a next data packet only after receiving the ACK packet. However, if the transmit end sends an excess retransmitted packet and the retransmitted packet is successfully received by the receive end, a large quantity of receive buffers can be released, to alleviate congestion. When an excess retransmitted packet is sent, it is ensured that the retransmitted packet is successfully received by the receive end as much as possible. If the retransmitted packet is lost again, sending the excess retransmitted packet in advance deteriorates network transmission.

Based on the foregoing description and the redundant retransmission manner, that is, a higher probability of receiving a retransmitted packet by the receive end is ensured, an opportunistic manner may be used for transmission in this embodiment of this application. In one manner, in a link recovery phase, an amount of data that is allowed to be sent is not limited by the advertised window and the congestion window, and a retransmitted packet is sent to the transmit end in a random redundant retransmission manner. When the redundant retransmission manner is used, there is a maximum probability that a retransmitted data packet can be received by the receive end. When the opportunistic manner is also used, this releases, to some extent, some receive buffers, to alleviate congestion. In another manner, when it is determined that a quantity of bits (a first data amount) of a data packet that has been sent to the receive end and that has not been received by the receive end is less than the congestion window (CWND), the data packet is sent to the receive end, that is, the data packet is obtained from the send buffer and sent to the receive end. The congestion window is usually related to a congestion degree and an amount of processed data of a network.

Acknowledgment information may further include an amount of data stored in the receive buffer of the receive end, or a whitelist, where the whitelist indicates a data packet stored in the receive buffer. Therefore, the transmit end may determine the first data amount based on an amount of data that has been sent to the data receive end and a second data amount, for example, determine a difference between the amount of data that has been sent to the data receive end and the second data amount as the first data amount. The second data amount is the amount of data stored in the receive buffer or an amount of data that is of the data packet in the receive buffer and that is determined based on the whitelist. Therefore, that the transmit end sends, based on the first feedback packet, copies of a first data packet to the receive end a plurality of times, to complete one round of retransmitting the first data packet may be implemented in the following manner.

The transmit end determines the first data packet based on the first feedback packet. When the first data amount is less than the congestion window of the transmit end, the transmit end sends the copies of the first data packet to the receive end a plurality of times, to complete the one round of retransmitting the first data packet.

On the contrary, when the first data amount is greater than or equal to CWND, it is forbidden to send the copies of the first data packet to the transmit end. To be specific, a quantity of bits of a data packet that has been sent and that has not been received by the receive end exceeds the congestion window. It indicates that a network status deteriorates and a packet loss rate is relatively high. Therefore, it is forbidden to send data to the receive end. In an existing solution, when a data packet is retransmitted, minimum values of the advertised window and the congestion window are compared with a quantity of data packets that have been sent to and that have not been acknowledged by the receive end. However, in this embodiment of this application, the advertised window is compared with a quantity of data packets that have been sent to the receive end and that have not been received by the receive end, to determine whether retransmission is performed. Some of the data packets that have been sent to and that have not been acknowledged by the receive end are received by the received end and stored in the receive buffer. However, the first data amount determined in this application excludes an amount of data that has been stored in the receive buffer, and then the first data amount is compared with the congestion window. Therefore, in comparison with the existing solution, an amount of data that can be sent is increased. Therefore, in this embodiment of this application, when the redundant retransmission manner is used, there is a maximum probability that a retransmitted data packet can be received by the receive end. When the opportunistic manner is also used, this releases, to some extent, some receive buffers, to alleviate congestion.

For example, the first data amount may be determined in the following manner.

The transmit end receives the second data amount sent by the receive end; and the transmit end determines the first data amount (an amount of data of a data packet that has been sent to the receive end and that has not been received by the receive end) based on the second data amount and the quantity of bits of the data packet that has been sent to the transmit end.

For example, new_inflight_size represents the first data amount, byte_received represents the second data amount, and new_inflight_size = old inflight size - byte received. old_inflight_size represents a first data amount that is updated based on the first data amount determined last time. Specifically, each time after the first data amount is determined, the first data amount is updated each time a data packet is sent, a data packet is acknowledged, or it is determined that a data packet is lost. For example, each time a data packet is sent, a sum of the first data amount and a quantity of bits of the data packet is used as an updated first data amount.

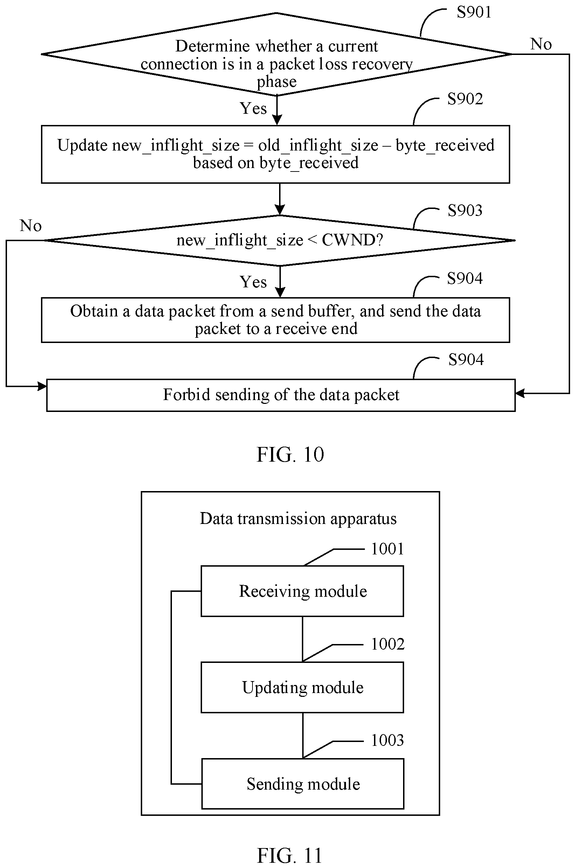

The following describes transmission in the opportunistic manner with reference to FIG. 10.

S901: Determine whether a current connection is in a packet loss recovery phase. If the current connection is in the packet loss recovery phase, S902 is performed. If the current connection is not in the packet loss recovery phase, S905 is performed.

For example, a data packet loss exists (that is, a packet loss event exists) in a network, and the current connection is determined to be in the packet loss recovery phase before lost packets are recovered.

S902: Update new_inflight_size = old inflight size - byte_received based on byte_received.

Each time acknowledgment information is received, new_inflight_size is updated based on byte_received.

For example, if a transmit end sends 100 bits to a receive end, new_inflight_size is equal to 100. After new_inflight_size is determined, 20 bits are sent to the receive end again, new_inflight_size changes to old inflight size, and old inflight size is equal to 120. An ACK packet sent by the transmit end is received, and a quantity of bits of a data packet that has been acknowledged by the receive end is determined based on the ACK packet. For example, the quantity of bits of the data packet that has been acknowledged by the receive end is determined based on an SEQ field of the ACK packet. If the quantity of bits is 20, old_inflight_size needs to be updated to 120 - 20 = 100. In addition, an RCV.NO field in the ACK packet indicates that byte_received is equal to 60, and new_inflight_size is determined to be 100 - 60 = 40. After S903 is performed, new_inflight_size is used as old_inflight_size.

S903: Determine whether new_inflight_size is less than CWND, where if new_inflight_size is less than CWND, S904 is performed; or if new_inflight_size is not less than CWND, S905 is performed.

S904: Obtain the data packet from a send buffer, send the data packet to the receive end, and perform S903.

S905: Forbid sending of the data packet.

For example, when the transmit end receives the acknowledgment information sent by the receive end, and the ACK packet is used as an example, the ACK packet includes the RCV.NO field, and the RCV.NO field is used to indicate a quantity of bits of a data packet in a receive buffer, that is, the receive end has received and has not acknowledged a second data amount of the received data packet, so that the transmit end may determine a first data amount based on the second data amount.

Based on a same inventive concept as the foregoing method embodiments, an embodiment of this application further provides a data transmission apparatus. The data transmission module may be applied to a receive end. The apparatus may specifically be a processor, a chip, a chip system, a functional module configured for receiving, or the like. Referring to FIG. 11, the data transmission apparatus may include a receiving module 1001, an updating module 1002, and a sending module 1003.

The receiving module 1001 receives a plurality of data packets from a transmit end, the updating module 1002 updates a receive buffer of the data receive end based on the plurality of data packets, and the sending module 1003 sends acknowledgment information to the transmit end based on an updated receive buffer. The acknowledgment information includes a blacklist, or includes a blacklist and a whitelist, the blacklist is used to indicate missing data packets in the updated receive buffer, the missing data packets are data packets that have been sent by the data transmit end and that have not been received by the data receive end, the whitelist is used to indicate several data packets received by the data receive end, and the several data packets include the plurality of data packets.

For example, functions of the receiving module 1001 and the updating module 1002 in this embodiment may be executed by the receive processing module 201 in FIG. 2.

For example, the blacklist included in the acknowledgment information may be an encoded blacklist. Alternatively, the blacklist and the whitelist included in the acknowledgment information may be an encoded blacklist and an encoded whitelist. The packet loss detection module 202 and the encoding module 203 in FIG. 2 may determine the blacklist and the whitelist and encode the blacklist and the whitelist. The acknowledgment information may be an ACK packet constructed by the construction module 204 shown in FIG. 2.

In a possible implementation, the whitelist includes an identifier of a data packet with the largest sequence number in the updated receive buffer, and the blacklist includes an identifier of a data packet with the smallest sequence number in the missing data packets.

In a possible implementation, the whitelist further includes an identifier of a data packet with a higher priority in the updated receive buffer, and a priority of a data packet is related to an importance degree of the data packet.

In a possible implementation, the sending module 1003 is specifically configured to: when a feedback condition is met, send the acknowledgment information to the data transmit end, where the feedback condition includes one or more of the following:
a quantity of received data packets reaches a first threshold;
a quantity of received data bits reaches a second threshold; or
a time point of a feedback period is reached.

In an example, a function of the sending module 1003 may be implemented by the feedback control module 205 in FIG. 2. In another example, the feedback control module 205 is configured to: determine whether the feedback condition is met, and when the feedback condition is met, indicate the sending module 1003 to send the acknowledgment information.

In a possible implementation, the blacklist includes an offset of a sequence number of a second data packet when a sequence number of a first data packet is used as a reference, the second data packet is any data packet in the missing data packets, and the first data packet is a data packet received by the data receive end; or the whitelist includes an offset of a sequence number of a third data packet when a sequence number of the first data packet is used as a reference, and the third data packet is any data packet in the several data packets.

In a possible implementation, the missing data packets include N data packets with consecutive sequence numbers, and the blacklist further includes an offset of a sequence number of a data packet with the smallest sequence number and an offset of a sequence number of a data packet with the largest sequence number in the N data packets with consecutive sequence numbers; or the several data packets include N data packets with consecutive sequence numbers, and the whitelist further includes an offset of a sequence number of a data packet with the smallest sequence number and an offset of a sequence number of a data packet with the largest sequence number in the N data packets with consecutive sequence numbers, where N is an integer greater than 1.

In a possible implementation, the offset of the sequence number is encoded by using an M-bit unsigned integer, high L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number, and low M-L bits of the second unsigned integer are used to encode the offset of the sequence number of the data packet with the largest sequence number, where both M and L are integers greater than 1, and M is greater than L.

In a possible implementation, the acknowledgment information further includes an identifier of a data packet with the largest sequence number in data packets that have been acknowledged.

In a possible implementation, the acknowledgment information further includes an amount of data currently stored in the receive buffer.

In a possible implementation, the blacklist and the whitelist are encoded by using a bitmap encoding manner.

In a possible implementation, the missing data packets include N1 data packets with consecutive sequence numbers, and the blacklist includes a sequence number range from the smallest sequence number to the largest sequence number in the N1 sequence numbers, where N1 is an integer greater than 0; or the several data packets include N2 data packets with consecutive sequence numbers, and the whitelist includes a sequence number range from the smallest sequence number to the largest sequence number in the N2 sequence numbers, where N2 is an integer greater than 0.

In a possible implementation, the acknowledgment information includes the blacklist and the whitelist, and the sending module 1003 is specifically configured to send a first feedback packet and a second feedback packet to the data transmit end, where the first feedback packet includes the blacklist, and the second feedback packet includes the whitelist.

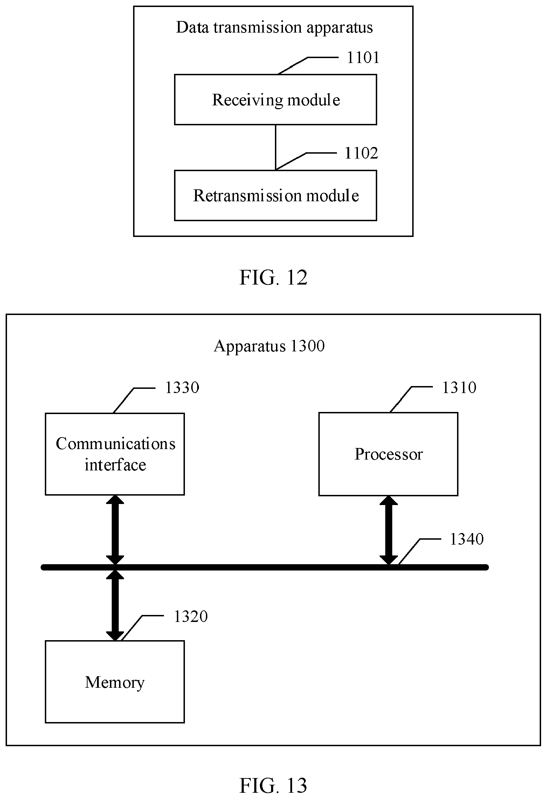

Based on a same inventive concept as the foregoing method embodiments, an embodiment of this application further provides a data transmission apparatus. The data transmission module may be applied to a transmit end. The apparatus may specifically be a processor, a chip, a chip system, a functional module configured for receiving, or the like. Referring to FIG. 12, the data transmission apparatus includes a receiving module 1101 and a retransmission module 1102.

After the receiving module 1101 receives a first feedback packet from a data receive end, the retransmission module 1102 may determine, based on a status of a data packet received by the receive end from the data transmit end that is fed back in the first feedback packet, that a first data packet is a data packet that needs to be retransmitted, and send copies of the first data packet to the data receive end a plurality of times, to complete one round of retransmitting the first data packet, where a time interval at which every two copies are sent is random.

In an example, a function of the receiving module 1101 may be implemented by the parsing module 206 in FIG. 2, and a function of the retransmission module 1102 may be implemented by the retransmission module 1102 in FIG. 2.

In another example, after the receiving module 1101 receives the feedback packet, the parsing module 206 executes a specific function of parsing the feedback packet to obtain a blacklist and a whitelist, and then sends the blacklist and the whitelist to the retransmission module 1102. The retransmission module 1102 performs retransmission based on the blacklist and the whitelist.

In still another example, after the receiving module 1101 receives the feedback packet, the retransmission module 1102 executes a specific function of parsing the feedback packet to obtain a blacklist and a whitelist, and performs retransmission based on the blacklist and the whitelist.

For example, after completing the one round of retransmission, the retransmission module 1102 determines again, based on a second feedback packet sent by the receive end, that the first data packet needs to be retransmitted; and sends the copies of the first data packet to the data receive end a plurality of times, to complete another round of retransmitting the first data packet, where in the another round of retransmitting the first data packet, every two copies are still sent at a random time interval, and a quantity of times of retransmitting the copies of the first data packet in the another round of retransmission may be greater than or equal to a quantity of times of retransmitting the copies of the first data packet in the one round of retransmission.

For example, the first feedback packet includes an amount of data stored in a receive buffer of the receive end, or a whitelist, where the whitelist indicates a data packet stored in the receive buffer. The receiving module 1101 may send, to the retransmission module 1102, the first feedback packet including the amount of data stored in the receive buffer of the receive end or the whitelist, so that the retransmission module 1102 may determine a first data amount based on the amount of data stored in the receive buffer or the whitelist. For a specific determining manner, refer to the foregoing descriptions. Details are not described herein again. When the first data amount is less than a congestion window of the data transmit end, the retransmission module 1102 sends the copies of the first data packet to the data receive end a plurality of times, to complete the one round of retransmitting the first data packet. In an example, when the first data amount is greater than or equal to a congestion window, the retransmission module 1102 does not send the copies of the first data packet to the receive end.

It should be understood that in this embodiment of this application, division into modules is an example and is merely logical function division. In an actual implementation, another division manner may be used. In addition, functional modules in this embodiment of this application may be integrated into one processor, or each of the modules may exist alone physically, or two or more modules may be integrated into one module. The integrated module may be implemented in a form of hardware, or may be implemented in a form of a software functional module.

Based on a same conception, FIG. 13 shows an apparatus 1300 according to this application. For example, the apparatus 1300 may be a chip or a chip system. Optionally, in this embodiment of this application, the chip system may include a chip, or may include a chip and another discrete component. The apparatus 1300 may include at least one processor 1310. The apparatus 1300 may further include at least one memory 1320, configured to store program instructions and/or data. The memory 1320 is coupled to the processor 1310. Coupling in this embodiment of this application is an indirect coupling or a communication connection between apparatuses, units, or modules, may be in an electrical, a mechanical, or another form, and is used for information exchange between the apparatuses, the units, or the modules. The processor 1310 may operate with the memory 1320. The processor 1310 may execute the program instructions stored in the memory 1320. Optionally, the at least one memory 1320 may be included in the processor 1310.

The apparatus 1300 may further include a communications interface 1330, and the apparatus 1300 may exchange information with another device through the communications interface 1330. The communications interface 1330 may be a circuit, a bus, a transceiver, or any apparatus that may be configured exchange information.

In a possible implementation, the apparatus 1300 may be applied to a receive end. Specifically, the apparatus 1300 may be an apparatus that can support the receive end to implement a function of the receive end in any one of the foregoing embodiments. The memory 1320 stores computer program instructions and/or data required for implementing the function of the receive end in any one of the foregoing embodiments. The processor 1310 may execute the computer program instructions stored in the memory 1320, to implement the method performed by the receive end in any one of the foregoing embodiments. When the apparatus is applied to the receive end, functions of the receiving module 1001, the updating module 1002, and the sending module 1003 shown in FIG. 11 may all be implemented by the processor 1310. In addition, functions of the receive processing module 201, the packet loss detection module 202, the encoding module 203, the construction module 204, and the feedback control module 205 in FIG. 2 may also be implemented by the processor 1310.

In a possible implementation, the apparatus 1300 may be applied to a transmit end. Specifically, the apparatus 1300 may be an apparatus that can support the transmit end to implement a function of the transmit end in any one of the foregoing embodiments. The memory 1320 stores computer program instructions and/or data required for implementing the function of the transmit end in any one of the foregoing embodiments. The processor 1310 may execute the computer program instructions stored in the memory 1320, to implement the method performed by the transmit end in any one of the foregoing embodiments. When the apparatus is applied to the receive end, functions of the receiving module 1101 and the retransmission module 1102 shown in FIG. 12 may all be implemented by the processor 1310. In addition, functions of the parsing module 206 and the retransmission module 207 shown in FIG. 2 may also be implemented by the processor 1310.

In this embodiment of this application, a specific connection medium between the communications interface 1330, the processor 1310, and the memory 1320 is not limited. In this embodiment of this application, the memory 1320, the processor 1310, and the communications interface 1330 are connected by using a bus 1340 in FIG. 13, and the bus 1340 is represented by a thick line in FIG. 13. A connection manner between other components is schematically described, and is not limited thereto. The bus may be classified into an address bus, a data bus, a control bus, and the like. For ease of representation, only one thick line is used to represent the bus in FIG. 13, but this does not mean that there is only one bus or only one type of bus.

In the embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware in the processor and a software module.

In the embodiments of this application, the memory may be a non-volatile memory, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer. However, this is not limited thereto. The memory in the embodiments of this application may alternatively be a circuit or any other apparatus that can implement a storage function, and is configured to store program instructions and/or data.

In this application, a redundancy feedback manner combining a blacklist and a whitelist is used. The blacklist improves a response capability of a packet loss on a reverse path, and the whitelist reduces unnecessary retransmission. This ensures high performance in a case of a packet loss on the reverse path. In this application, a flagged relative integer encoding manner may be used. An encoding manner by using a start sequence number and an end sequence number is simple, but occupies relatively large space. A bitmap encoding manner saves large space, but has low efficiency when a small quantity of packets are lost. A relative integer encoding manner is simple and occupies relatively small space. The flagged relative integer encoding manner further reduces space occupation. In this application, the transmit end may use a random redundant retransmission manner, so that transmission in an opportunistic manner may be performed when a high probability of successful retransmission is ensured. This improves a retransmission success rate. In the embodiments of this application, a manner in which the transmit end cooperates with the received end may also be used. To be specific, the receive end determines whether a packet is lost, and generates a blacklist and a whitelist and feeds back, in a redundancy manner, the blacklist and the whitelist to the transmit end. The transmit end uses the random redundant retransmission manner. This improves transmission performance.

The applicant tests the solution provided in the embodiments of this application in the following two scenarios:

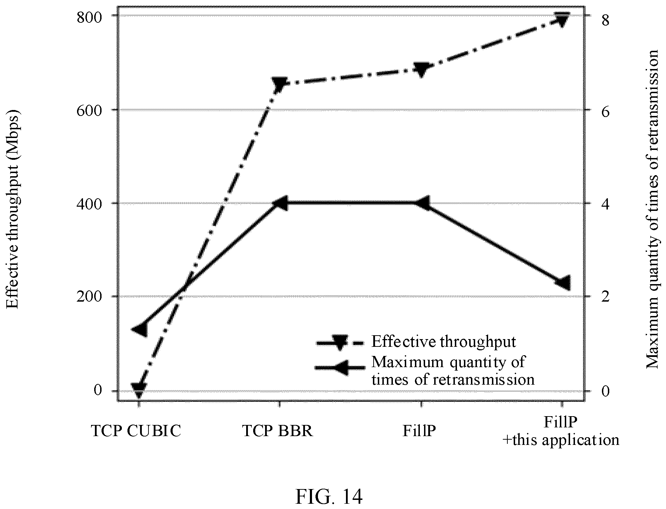

Scenario 1: In a lossy network with a high BDP, a bottleneck link capacity is 1 Gbps, a round-trip time is 300 ms, and a packet loss rate is 3%. A send/receive buffer is set to 256 MB. According to the existing TCP CUBIC protocol, TCP BBR protocol, FillP protocol, and the solution provided in this application, a transmit end sends data packets to a receive end 100 times by using each protocol, and an average value of an effective throughput and a maximum quantity of times of retransmission are evaluated. An obtained test result is shown in FIG. 14. The test result shows that according to the solution provided in the embodiments of this application, the maximum quantity of times of retransmitting the data packets can be reduced by 43%, that is, all the data packets are sent to the receive end after being retransmitted a maximum of 2.3 times (originally, four times are required). This reduces waiting of a head-of-line packet in the receive buffer, and the effective throughput can be increased by 16%.

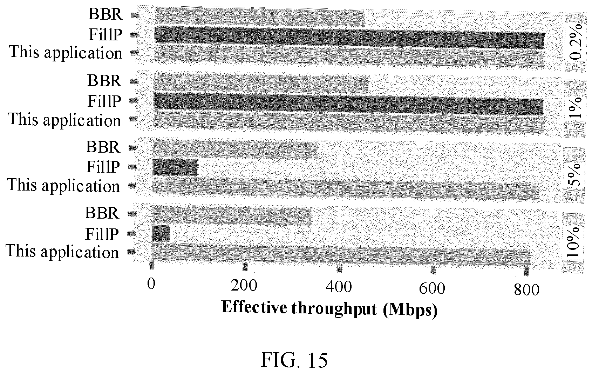

Scenario 2: In a lossy network with a high BDP, a bottleneck link capacity is 1 Gbps, a round-trip time is 120 ms, and a packet loss rate of a data packet on a forward path is 3%. Packet loss rates of a reverse ACK packet are 0.2%, 1%, 5%, and 10%. A send/receive buffer is set to 256 MB. According to the existing TCP BBR protocol, FillP protocol, and the solution provided in this application, a transmit end sends data packets to a receive end 100 times by using each protocol, and an average value of an effective throughput and a maximum quantity of times of retransmission are evaluated. An obtained test result is shown in FIG. 15. The test result shows that when a packet loss on a reverse path is serious (the packet loss rate of the reverse ACK packet > 5%), in comparison with the other two protocols, the effective throughput of this application can be increased by 7 to 20 times.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device are used to generate an apparatus for implementing a specific function in one or more processes in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device are used to provide a step for implementing a specific function in one or more processes in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

## Claims

1. A data transmission method, comprising:
receiving, by a data receive end, a plurality of data packets from a data transmit end;
updating, by the data receive end, a receive buffer of the data receive end based on the plurality of data packets; and
sending, by the data receive end, acknowledgment information to the data transmit end based on the updated receive buffer, wherein
the acknowledgment information comprises a blacklist, or comprises a blacklist and a whitelist, the blacklist is used to indicate missing data packets in the updated receive buffer, the missing data packets are data packets that have been sent by the data transmit end and that have not been received by the data receive end, the whitelist is used to indicate several data packets that have been received by the data receive end, and the several data packets comprise the plurality of data packets.

2. The method according to claim 1, wherein the whitelist comprises an identifier of a data packet with the largest sequence number in the updated receive buffer, and the blacklist comprises an identifier of a data packet with the smallest sequence number in the missing data packets.

3. The method according to claim 1 or 2, wherein the whitelist further comprises an identifier of a data packet with a higher priority in the updated receive buffer, and a priority of a data packet is related to an importance degree of the data packet.

4. The method according to any one of claims 1 to 3, wherein the sending, by the data receive end, acknowledgment information to the data transmit end comprises:
when a feedback condition is met, sending, by the data receive end, the acknowledgment information to the data transmit end, wherein
the feedback condition comprises one or more of the following:
a quantity of received data packets reaches a first threshold;
a quantity of received data bits reaches a second threshold; or
a time point of a feedback period is reached.

5. The method according to any one of claims 1 to 4, wherein the blacklist comprises an offset of a sequence number of a second data packet when a sequence number of a first data packet is used as a reference, the second data packet is any data packet in the missing data packets, and the first data packet is a data packet that has been received by the data receive end; or
the whitelist comprises an offset of a sequence number of a third data packet when a sequence number of the first data packet is used as a reference, and the third data packet is any data packet in the several data packets.

6. The method according to claim 5, wherein the missing data packets comprise N data packets with consecutive sequence numbers, and the blacklist further comprises an offset of a sequence number of a data packet with the smallest sequence number and an offset of a sequence number of a data packet with the largest sequence number in the N data packets with consecutive sequence numbers; or
the several data packets comprise N data packets with consecutive sequence numbers, and the whitelist further comprises an offset of a sequence number of a data packet with the smallest sequence number and an offset of a sequence number of a data packet with the largest sequence number in the N data packets with consecutive sequence numbers, wherein N is an integer greater than 1.

7. The method according to claim 6, wherein the offset of the sequence number is encoded by using an M-bit unsigned integer, high L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number, and low M-L bits of the second unsigned integer are used to encode the offset of the sequence number of the data packet with the largest sequence number, wherein both M and L are integers greater than 1, and M is greater than L.

8. The method according to any one of claims 1 to 7, wherein the acknowledgment information further comprises an identifier of a data packet with the largest sequence number in data packets that have been acknowledged.

9. The method according to any one of claims 1 to 8, wherein the acknowledgment information further comprises an amount of data currently stored in the receive buffer.

10. The method according to any one of claims 1 to 4, wherein the blacklist and the whitelist are encoded by using a bitmap encoding manner.

11. The method according to any one of claims 1 to 4, wherein the missing data packets comprise N1 data packets with consecutive sequence numbers, and the blacklist comprises a sequence number range from the smallest sequence number to the largest sequence number in the N1 sequence numbers, wherein N1 is an integer greater than 0; or
the several data packets comprise N2 data packets with consecutive sequence numbers, and the whitelist comprises a sequence number range from the smallest sequence number to the largest sequence number in the N2 sequence numbers, wherein N2 is an integer greater than 0.

12. The method according to any one of claims 1 to 11, wherein the acknowledgment information comprises the blacklist and the whitelist, and the sending acknowledgment information to the data transmit end comprises:
sending a first feedback packet and a second feedback packet to the data transmit end, wherein the first feedback packet comprises the blacklist, and the second feedback packet comprises the whitelist.

13. A data transmission method, comprising:
receiving, by a data transmit end, a first feedback packet from a data receive end, wherein the first feedback packet is used to feed back a status of receiving a data packet from the data transmit end by the data receive end; and
sending, by the data transmit end based on the first feedback packet, copies of a first data packet to the data receive end a plurality of times, to complete one round of retransmitting the first data packet, wherein the first data packet is a data packet that needs to be retransmitted by the data transmit end, and every two copies are sent at a random time interval.

14. The method according to claim 13, wherein the method further comprises:
determining again, by the data transmit end based on a second feedback packet sent by the data receive end, that the first data packet needs to be retransmitted; and
sending, by the data transmit end, the copies of the first data packet to the data receive end a plurality of times, to complete another round of retransmitting the first data packet, wherein in the another round of retransmitting the first data packet, every two copies are still sent at a random time interval, and a quantity of times of retransmitting the copies of the first data packet in the another round of retransmission is greater than a quantity of times of retransmitting the copies of the first data packet in the one round of retransmission.

15. The method according to claim 13, wherein the first feedback packet comprises a blacklist, the blacklist is used to indicate missing data packets in the updated receive buffer, and the missing data packets are data packets that have been sent by the data transmit end and that have not been received by the data receive end.

16. The method according to any one of claims 13 to 15, wherein a quantity of times of retransmitting the first data packet in a current round is positively related to a sequence number of the round of retransmitting the first data packet.

17. The method according to any one of claims 13 to 16, wherein the first feedback packet comprises an amount of data stored in the receive buffer of the receive end, or a whitelist, the whitelist indicates a data packet stored in the receive buffer, and the sending, by the data transmit end based on the first feedback packet, copies of a first data packet to the data receive end a plurality of times, to complete one round of retransmitting the first data packet comprises:
determining, by the data transmit end based on the first feedback packet, the first data packet and that a first data amount is less than a congestion window of the data transmit end, wherein the first data amount is an amount of data determined by the data transmit end based on an amount of data that has been sent to the data receive end and a second data amount, and the second data amount is the amount of data stored in the receive buffer or an amount of data that is of the data packet in the receive buffer and that is determined based on the whitelist; and
sending, by the data transmit end, the copies of the first data packet to the data receive end the plurality of times, to complete the one round of retransmitting the first data packet.

18. A data transmission apparatus, comprising:
a receiving module, configured to receive a plurality of data packets from a data transmit end;
an updating module, configured to update a receive buffer of the data receive end based on the plurality of data packets; and
a sending module, used by the data receive end to send acknowledgment information to the data transmit end based on the updated receive buffer, wherein
the acknowledgment information comprises a blacklist, or comprises a blacklist and a whitelist, the blacklist is used to indicate missing data packets in the updated receive buffer, the missing data packets are data packets that have been sent by the data transmit end and that have not been received by the data receive end, the whitelist is used to indicate several data packets that have been received by the data receive end, and the several data packets comprise the plurality of data packets.

19. The apparatus according to claim 18, wherein the whitelist comprises an identifier of a data packet with the largest sequence number in the updated receive buffer, and the blacklist comprises an identifier of a data packet with the smallest sequence number in the missing data packets.

20. The apparatus according to claim 18 or 19, wherein the whitelist further comprises an identifier of a data packet with a higher priority in the updated receive buffer, and a priority of a data packet is related to an importance degree of the data packet.

21. The apparatus according to any one of claims 18 to 20, wherein the sending module is specifically configured to: when a feedback condition is met, send the acknowledgment information to the data transmit end, wherein
the feedback condition comprises one or more of the following:
a quantity of received data packets reaches a first threshold;
a quantity of received data bits reaches a second threshold; or
a time point of a feedback period is reached.

22. The apparatus according to any one of claims 18 to 21, wherein the blacklist comprises an offset of a sequence number of a second data packet when a sequence number of a first data packet is used as a reference, the second data packet is any data packet in the missing data packets, and the first data packet is a data packet that has been received by the data receive end; or
the whitelist comprises an offset of a sequence number of a third data packet when a sequence number of the first data packet is used as a reference, and the third data packet is any data packet in the several data packets.

23. The apparatus according to claim 22, wherein the missing data packets comprise N data packets with consecutive sequence numbers, and the blacklist further comprises an offset of a sequence number of a data packet with the smallest sequence number and an offset of a sequence number of a data packet with the largest sequence number in the N data packets with consecutive sequence numbers; or
the several data packets comprise N data packets with consecutive sequence numbers, and the whitelist further comprises an offset of a sequence number of a data packet with the smallest sequence number and an offset of a sequence number of a data packet with the largest sequence number in the N data packets with consecutive sequence numbers, wherein N is an integer greater than 1.

24. The apparatus according to claim 23, wherein the offset of the sequence number is encoded by using an M-bit unsigned integer, high L bits of a first unsigned integer are a first value, and the first value indicates a first data packet in the N data packets with consecutive sequence numbers; high L bits of the second unsigned integer are a second value, and the second value indicates an N^{th} data packet in the N data packets with consecutive sequence numbers; and low M-L bits of the first unsigned integer are used to encode the offset of the sequence number of the data packet with the smallest sequence number, and low M-L bits of the second unsigned integer are used to encode the offset of the sequence number of the data packet with the largest sequence number, wherein both M and L are integers greater than 1, and M is greater than L.

25. The apparatus according to any one of claims 18 to 24, wherein the acknowledgment information further comprises an identifier of a data packet with the largest sequence number in data packets that have been acknowledged.

26. The apparatus according to any one of claims 18 to 25, wherein the acknowledgment information further comprises an amount of data currently stored in the receive buffer.

27. The apparatus according to any one of claims 18 to 21, wherein the blacklist and the whitelist are encoded by using a bitmap encoding manner.

28. The apparatus according to any one of claims 18 to 21, wherein the missing data packets comprise N1 data packets with consecutive sequence numbers, and the blacklist comprises a sequence number range from the smallest sequence number to the largest sequence number in the N1 sequence numbers, wherein N1 is an integer greater than 0; or
the several data packets comprise N2 data packets with consecutive sequence numbers, and the whitelist comprises a sequence number range from the smallest sequence number to the largest sequence number in the N2 sequence numbers, wherein N2 is an integer greater than 0.

29. The apparatus according to any one of claims 18 to 28, wherein the acknowledgment information comprises the blacklist and the whitelist, and the sending module is specifically configured to:
send a first feedback packet and a second feedback packet to the data transmit end, wherein the first feedback packet comprises the blacklist, and the second feedback packet comprises the whitelist.

30. A data transmission apparatus, comprising:
a receiving module, configured to receive a first feedback packet from a data receive end, wherein the first feedback packet is used to feed back a status of receiving a data packet from the data transmit end by the data receive end; and
a retransmission module, configured to send, based on the first feedback packet, copies of a first data packet to the data receive end a plurality of times, to complete one round of retransmitting the first data packet, wherein the first data packet is a data packet that needs to be retransmitted by the data transmit end, and every two copies are sent at a random time interval.

31. The apparatus according to claim 30, wherein the retransmission module is further configured to determine again, based on a second feedback packet sent by the data receive end, that the first data packet needs to be retransmitted; and send the copies of the first data packet to the data receive end a plurality of times, to complete another round of retransmitting the first data packet, wherein in the another round of retransmitting the first data packet, every two copies are still sent at a random time interval, and a quantity of times of retransmitting the copies of the first data packet in the another round of retransmission is greater than a quantity of times of retransmitting the copies of the first data packet in the one round of retransmission.

32. The apparatus according to claim 30, wherein the first feedback packet comprises a blacklist, the blacklist is used to indicate missing data packets in the updated receive buffer, and the missing data packets are data packets that have been sent by the data transmit end and that have not been received by the data receive end.

33. The apparatus according to any one of claims 30 to 32, wherein a quantity of times of retransmitting the first data packet in the one round is positively related to a sequence number of the round of retransmitting the first data packet.

34. The apparatus according to any one of claims 30 to 33, wherein the first feedback packet comprises an amount of data stored in the receive buffer of the receive end, or a whitelist, the whitelist indicates a data packet stored in the receive buffer, and the retransmission module is specifically configured to:
determine, based on the first feedback packet, the first data packet and that a first data amount is less than a congestion window of the data transmit end, wherein the first data amount is an amount of data determined by the data transmit end based on an amount of data that has been sent to the data receive end and a second data amount, and the second data amount is the amount of data stored in the receive buffer or an amount of data that is of the data packet in the receive buffer and that is determined based on the whitelist; and
send the copies of the first data packet to the data receive end the plurality of times, to complete the one round of retransmitting the first data packet.

35. A data transmission apparatus, wherein the apparatus is applied to a data receive end, and comprises:
a communications interface, a processor, and a memory, wherein
the memory is configured to store a software program, and the processor is configured to: read the software program stored in the memory, receive and send data through the communications interface, and implement the method according to any one of claims 1 to 12.

36. A data transmission apparatus, wherein the apparatus is applied to a data transmit end, and comprises:
a communications interface, a processor, and a memory, wherein
the memory is configured to store a software program, and the processor is configured to: read the software program stored in the memory, receive and send data through the communications interface, and implement the method according to any one of claims 13 to 17.

37. A computer-readable storage medium, wherein the computer-readable storage medium stores a software program, and when the software program is read and executed by one or more processors, the method according to any one of claims 1 to 17 is implemented.
